(19) Europäisches Patentamt
European Patent Office
Office européen des brevets

(11) Veröffentlichungsnummer: **0 007 086**
**B1**

(12) # EUROPÄISCHE PATENTSCHRIFT

(45) Veröffentlichungstag der Patentschrift: **10.02.82**

(51) Int. Cl.³: **C 08 L 67/06**, C 08 K 5/53

(21) Anmeldenummer: **79102344.3**

(22) Anmeldetag: **09.07.79**

(54) **Lichthärtbare Form-, Tränk- und Überzugsmassen sowie daraus hergestellte Formkörper.**

(30) Priorität: **14.07.78 DE 2830928**
**14.03.79 DE 2909993**

(43) Veröffentlichungstag der Anmeldung: **23.01.80 Patentblatt 80/2**

(45) Bekanntmachung des Hinweises auf die Patenterteilung: **10.02.82 Patentblatt 82/6**

(84) Benannte Vertragsstaaten: **BE CH DE FR GB IT NL SE**

(56) Entgegenhaltungen:
**DE-A-2 104 972**
**DE-B-2 043 352**
**GB-A-1 156 460**

(73) Patentinhaber: **BASF Aktiengesellschaft, Carl-Bosch-Strasse 38, D-6700 Ludwigshafen (DE)**

(72) Erfinder: **Hesse, Anton, Dr. Chem., Peter-Nickel-Strasse 15, D-6946 Luetzelsachsen (DE)**
Erfinder: **Lechtken, Peter, Dr. Chem., Ludwigshafener Strasse 6b, D-6710 Frankenthal (DE)**
Erfinder: **Nicolaus, Walter, Kleestrasse 5, D-6700 Ludwigshafen (DE)**
Erfinder: **Scholz, Dankmar, Heidelberger Ring 31, D-6710 Frankenthal (DE)**

**EP 0 007 086 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG.

# Lichthärtbare Form-, Tränk- und Überzugsmassen sowie daraus hergestellte Formkörper

Für die Fotopolymerisation von ungesättigten Polyesterharzen (UP-Harzen) sind als Sensibilisatoren zahlreiche Verbindungen beschrieben. Mit Acyloinen, Acyloinestern oder Acyloinäthern als UV-Sensibilisatoren ist eine verhältnismässig schnelle UV-Härtung von UP-Harzen möglich, doch sind die Formstoffe nach der Aushärtung durch energiereiche Strahlung (Quecksilberdampf-Hochdruckstrahler) gelbstichig. Diese nachteilige Vergilbung, die beim Lagern der Formstoffe im Dunkeln zurückgeht, beim Aufbewahren am Tages- oder Kunstlicht aber wieder zunimmt, macht sich bei der Beschichtung heller Hölzer oder bei der Herstellung von Licht- und Wellplatten störend bemerkbar.

Die Vergilbung von Formstoffen, die aus benzoinätherhaltigen UP-Harzen hergestellt wurden, kann nach DE-OS 2 104 972 durch Verbindungen des dreiwertigen Phosphors zwar verringert, aber nicht genügend stark unterdrückt werden, um die oben genannten Anwendungen für die UV-Härtung zu erschliessen. Auch der Einsatz von Benzilketalen, der zwar zu lagerfähigen, sehr reaktiven UV-härtbaren UP-Harzen führt, bringt hinsichtlich einer günstigeren Farbe der Formstoffe keine Verbesserung.

Aufgabe der vorliegenden Erfindung war es, lichthärtbare Form-, Tränk- und Überzugsmassen zu entwickeln, die gegenüber dem Stand der Technik bei der UV-Härtung eine wesentlich grössere Reaktionsgeschwindigkeit aufweisen bei vergleichbarer oder besserer Farbe der erhaltenen Formkörper.

Diese Aufgabe wird gelöst durch lichthärtbare Form-, Tränk-und Überzugsmassen, die enthalten ein Gemisch aus

a) mindestens einem äthylenisch ungesättigten copolymerisierbaren Polyester,
b) mindestens einer äthylenisch ungesättigten copolymerisierbaren monomeren Verbindung,
c) einem Inhibitor,
d) 0,005 bis 5 Gew.-% bezogen auf a+b, eines UV-Sensibilisators

sowie gegebenenfalls

e) Paraffinen, thermisch zerfallenden Initiatoren, Füllstoffen, Verstärkungsmitteln, Gleitmitteln,, inerten Lösungsmitteln, schrumpfungsmindernden Zusätzen und/oder weiteren bei ungesättigten Polyestern verwendbaren Hilfsstoffen,

und die dadurch gekennzeichnet sind, dass der UV-Sensibilisator besteht aus mindestens einer Acylphosphinoxid-Verbindung der Formel

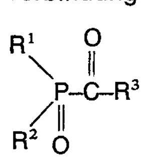

(I)

wobei $R^1$ für einen geradkettigen oder verzweigten Alkylrest mit 1 bis 6 Kohlenstoffatomen, einen Cyclohexyl-, Cyclopentyl-, Aryl-, halogen-, alkyl- oder alkoxy.substituierten Aryl-, einen S- oder N-haltigen fünf- oder sechsgliedrigen heterocyclischen Rest steht;

$R^2$ die Bedeutung von $R^1$ hat, wobei $R^1$ und $R^2$ untereinander gleich oder verschieden sein können, oder für einen Alkoxyrest mit 1 bis 6 Kohlenstoffatomen, für einen Aryloxy- oder einen Arylalkoxyrest steht, oder $R^1$ und $R^2$, unter Einbeziehung des Phosphoratoms miteinander zu einem Ring verbunden sind;

$R^3$ für einen geradkettigen oder verzweigten Alkylrest mit 2 bis 18 Kohlenstoffatomen, einen 3 bis 10 Kohlenstoffatome enthaltenden cycloaliphatischen Rest, einen Phenyl- oder Naphthylrest, einen S-, O- oder N-haltigen fünf- oder sechsgliedrigen heterocyclischen Rest steht, wobei die Reste $R^3$ gegebenenfalls weitere Substituenten tragen können, oder für die Gruppierung

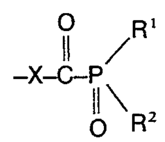

steht, worin $R^1$ und $R^2$ die oben angegebene Bedeutung haben und X für einen Phenylrest oder einen 2 bis 6 Kohlenstoffatome enthaltenden aliphatischen oder cycloaliphatischen zweiwertigen Rest steht und

gegebenenfalls einer oder mehrere der Reste $R^1$ bis $R^3$ olefinisch ungesättigt ist.

Die erfindungsgemässen Form-, Tränk- und Überzugsmassen zeichnen sich durch eine hohe Reaktivität bei der Bestrahlung mit längerwelligem UV-Licht (Wellenlängen zwischen etwa 300–500 nm) aus. Vorteilhaft gegenüber Formmassen mit einem Gehalt an Acyloinderivaten oder Benzilketalen als Sensibilisatoren sind die wesentlich geringere Vergilbungsneigung der gehärteten Formstoffe und insbesondere eine schnellere Durchhärtung dickwandiger glasfaserhaltiger Formmassen. Dies wirkt sich besonders günstig bei der UV-Härtung von Laminaten aus, die im Hand-, Wickel-, Schleuder- oder Faserspritzverfahren gefertigt werden.

Entsprechend günstige Ergebnisse resultieren auch bei der UV-Härtung von glasfaserfreien, knetbaren Formmassen.

Bevorzugte UV-Sensibilisatoren sind solche Acylphosphinoxidverbindungen der Formel I, bei denen

$R^3$ einen Cycloalkylrest, Phenylrest, Naphthylrest, einen S-, N- oder O-haltigen fünf- oder sechsgliedrigen heterocyclischen Rest bedeutet, der zumindest in den beiden ortho-Stellungen zur Carbonylgruppe die Substituenten A und B gebunden enthält, wobei A und B gleich oder verschieden sind und für Alkyl-, Cycloalkyl-, Aryl-, Alkoxy-, Thioalkyl-, Carbalkoxy-, Cyanogruppen oder Halogenatome stehen.

Das Merkmal «in den beiden ortho-Stellungen zur Carbonylgruppe die Substituenten A und B

gebunden enthält» ist so zu verstehen, dass die Substituenten A und B an den beiden zur Verknüpfungsstelle mit der Carbonylgruppe benachbarten Kohlenstoffatomen, die substituiert sein können, gebunden sind. Dies bedeutet z.B., dass der $\alpha$-Naphthylrest mindestens in den 2,8-Stellungen und der $\beta$-Naphthylrest mindestens in den 1,3-Stellungen die Substituenten A und B gebunden enthält.

Derartige UV-Sensibilisatoren, insbesondere das besonders bevorzugte 2,4,6-Trimethylbenzoyldiphenylphosphinoxid übertreffen in ihrer Reaktivität alle bisher bekannten Fotoinitiatoren für ungesättigte Polyesterharze. Diese hohe Reaktivität hat eine starke Wärmeentwicklung beim Härten von Laminaten zur Folge. Dadurch wird es möglich, die Härtung mit Strahlern geringerer Energieabgabe als bisher durchzuführen. Man kann beispielsweise auf die Verwendung der teuren Quecksilberdampf-Hochdruckstrahler verzichten und statt dessen einfachere Niederdrucklampen, z.B. übliche Leuchtstoffröhren einsetzen.

Weiterhin wird mit den bevorzugten hochreaktiven UV-Sensibilisatoren die Lagerfähigkeit der sensibilisierten Form-, Tränk- und Überzugsmassen entscheidend verbessert, so dass Einkomponentensysteme herstellbar sind, die über die gesamte Lagerzeit eine konstante Härtungsaktivität besitzen.

Zu den zur Herstellung der lichthärtbaren Form-, Tränk- und Überzugsmassen verwendbaren Ausgangskomponenten a) bis e) ist folgendes auszuführen:

a) Als ungesättigte Polyester im Sinne der Erfindung sind nicht nur die üblichen ungesättigten Polykondensationsprodukte aus vorzugsweise Dicarbonsäuren und Glykolen zu verstehen, sondern auch urethangruppenhaltige ungesättigte Polyester und ungesättigte Vinylesterharze.

Als ungesättigte Polyester eignen sich vorzugsweise die üblichen Polykondensationsprodukte aus mehrwertigen, insbesondere zweiwertigen Carbonsäuren und deren veresterbaren Derivaten, insbesondere deren Anhydride, die mit mehrwertigen, insbesondere zweiwertigen Alkoholen esterartig verknüpft sind, und gegebenenfalls zusätzlich Reste einwertiger Carbonsäuren und/oder Reste einwertiger Alkohole und/oder Reste von Hydroxycarbonsäuren enthalten, wobei zumindest ein Teil der Reste über äthylenisch ungesättigte copolymerisierbare Gruppen verfügen muss.

Als mehrwertige, insbesondere zweiwertige, gegebenenfalls ungesättigte Alkohole eignen sich die üblichen insbesondere acyclische Gruppen, cyclische Gruppen als auch beide Arten von Gruppen aufweisende Alkandiole und Oxaalkandiole, wie z.B. Äthylenglykol, Propylenglykol-1,2, Propandiol-1,3, Butylenglykol-1,3, Butandiol-1,4, Hexandiol-1,6, 2,2-Dimethylpropandiol-1,3, Diäthylenglykol, Triäthylenglykol, Polyäthylenglykol, Cyclohexandiol-1,2, 2,2-Bis-(p-hydroxycyclohexyl)-propan, Trimethylolpropanmonoallyläther oder Butendiol-1,4. Ferner können ein-, drei- oder höherwertige Alkohole, wie z.B. Äthylhexanol, Fettalkohole, Benzylalkohole, 1,2-Di-(allyloxy)-propanol-(3), Glycerin, Pentaerythrit oder Trimethylolpropan in untergeordneten Mengen mitverwendet werden. Die mehrwertigen, insbesondere zweiwertigen Alkohole werden im allgemeinen in stöchiometrischen oder annähernd stöchiometrischen Mengen mit mehrbasischen, insbesondere zweibasischen Carbonsäuren bzw. deren kondensierbaren Derivaten umgesetzt.

Geeignete Carbonsäuren bzw. deren Derivate sind zweibasische olefinisch ungesättigte, vorzugsweise $\alpha\beta$-olefinisch ungesättigte Carbonsäuren, wie z. B. Maleinsäure, Fumarsäure, Chlormaleinsäure, Itaconsäure, Citraconsäure, Methylenglutarsäure und Mesaconsäure bzw. deren Ester oder vorzugsweise deren Anhydride. In die Polyester können weiterhin zusätzlich andere modifizierend wirkende zweibasische, ungesättigte und/oder gesättigte, sowie aromatische Carbonsäuren, wie z.B. Bernsteinsäure, Glutarsäure, $\alpha$-Methylglutarsäure, Adipinsäure, Sebacinsäure, Pimelinsäure, Phthalsäureanhydrid, o-Phthalsäure, Isophthalsäure, Terephthalsäure, Dihydrophthalsäure, Tetrahydrophthalsäure, Tetrachlorphthalsäure, 3,6-Endomethylen-1,2,3,6-tetrahydrophthalsäure, Endomethylentetrachlorphthalsäure oder Hexachlorendomethylentetrahydrophthalsäure einkondensiert sein, ferner ein-, drei- und höherbasische Carbonsäuren, wie z. B. Äthylhexansäure, Fettsäuren, Methacrylsäure, Propionsäure, Benzoesäure, 1,2,4-Benzoltricarbonsäure oder 1,2,4,5-Benzoltetracarbonsäure. Vorzugsweise verwendet werden Maleinsäure bzw. deren Anhydrid und Fumarsäure.

Gemische ungesättigter Polyester, darunter auch solche, die in den Vinylmonomeren (b) nur beschränkt löslich sind und leicht kristallisieren, können ebenfalls vorteilhaft eingesetzt werden. Solche leicht kristallisierende ungesättigte Polyester können z.B. aus Fumarsäure, Adipinsäure, Terephthalsäure, Äthylenglykol, Butandiol-1,4, Hexandiol-1,6 und Neopentylglykol aufgebaut sein.

Geeignet sind auch ungesättigte Polyester mit vorzugsweise endständigen Doppelbindungen.

Die ungesättigten Polyester besitzen Säurezahlen von 10 bis 200, vorzugsweise von 20 bis 85 und mittlere Molekulargewichte von ungefähr 800 bis 6000, vorzugsweise von etwa 1000 bis 4000.

Die amorphen und gegebenenfalls kristallisierbaren ungesättigten Polyester werden im allgemeinen durch Schmelzkondensation oder Kondensation unter azeotropen Bedingungen aus ihren Ausgangskomponenten nach kontinuierlichen oder diskontinuierlichen Verfahren hergestellt.

Bezüglich der Zusammensetzung ungesättigter Polyester sei beispielsweise auch auf das Buch von H.V. Boenig, Unsaturated Polyesters: Structure and Properties, Amsterdam, 1964, verwiesen.

Anstelle von ungesättigten Polyestern können auch – wie bereits erwähnt – urethangruppenhaltige ungesättigte Polyester verwendet werden. Hierzu werden die oben genannten ungesättigten

Polyester mit organischen Polyisocyanaten, vorzugsweise aliphatischen, cycloaliphatischen und insbesondere aromatischen Diisocyanaten umgesetzt und dadurch die ungesättigte Polyesterkette verlängert und das Molekulargewicht vergrössert. Zur Kettenverlängerung geeignet sind beispielsweise aliphatische Diisocyanate, wie 1,4-Butandiisocyanat und 1,6-Hexan-diisocyanat, cycloaliphatische Diisocyanate, wie 1,3- und 1,4-Cyclohexan-diisocyanat, 1-Methyl-2,4- und 2,6-cyclohexan-diisocyanat sowie die entsprechenden Isomerengemische, Isophorondiisocyanat und 4,4'-, 2,4'- und 2,2'-Dicyclohexylmethan-diisocyanat sowie die entsprechenden Isomerengemische und vorzugsweise aromatische Diisocyanate, wie 2,4- und 2,6-Toluylen-diisocyanat und die entsprechenden Isomerengemische, 4,4-, 2,4'- und 2,2'-Diphenylmethan-diisocyanat sowie die entsprechenden Isomerengemische und 1,5-Naphthylen-diisocyanat. Zur Herstellung der urethangruppenhaltigen ungesättigten Polyester werden die Ausgangskomponenten zweckmässigerweise bei Temperaturen von 0 bis 120 °C, vorzugsweise 15 bis 60 °C in solchen Mengen zur Reaktion gebracht, dass das Verhältnis von Zerewitinoff-aktiven Wasserstoffatomen, vorzugsweise gebunden an OH- und COOH-Gruppen, der ungesättigten Polyester zu NCO-Gruppen der Polyisocyanate 1:0,1 bis 0,9 vorzugsweise 1:0,2 bis 0,7 beträgt. Die erhaltenen urethangruppenhaltigen ungesättigten Polyester besitzen Säurezahlen von 2 bis 30, vorzugsweise von 5 bis 20 und mittlere Molekulargewichte von ungefähr 1000 bis 10 000, vorzugsweise von etwa 1500 bis 6000.

Geeignete ungesättigte Vinylesterharze im Sinne der Erfindung besitzen die charakteristische Gruppierung $-CO-OCH_2CHOH-CH_2O-$ und enthalten endständige polymerisierbare ungesättigte Gruppen. Die Vinylesterharze werden hergestellt durch Umsetzung von etwa äquivalenten Mengen eines Polyepoxidharzes und einer ungesättigten Monocarbonsäure, beispielsweise von 2 Äquivalenten Methacrylsäure mit 2 Äquivalenten eines Polyepoxid-Harzes.

Vinylesterharze der genannten Art werden z.B. beschrieben in der US-PS 3 367 992, wonach Dicarbonsäure-Halbester von Hydroxyacrylaten oder -methacrylaten mit Polyepoxidharzen umgesetzt werden. Gemäss US-PS 3 066 112 und 3 179 623 werden Vinylesterharze aus Monocarbonsäuren, z.B. Acryl- und Methacrylsäure, erhalten; hier wird auch eine alternative Herstellungsmethode genannt, wonach ein Glycidylmethacrylat oder -acrylat mit dem Natriumsalz eines zweiwertigen Phenols, z.B. Bisphenol A, zur Reaktion gebracht wird. Vinylesterharze auf Basis von Epoxy-Novolac-Harzen sind in der US-PS 3 301 743 beschrieben. In der US-PS 3 256 226 werden Vinylesterharze offenbart, bei denen das Molekulargewicht des Polyepoxids durch Reaktion einer Dicarbonsäure mit dem Polyepoxidharz und mit Acrylsäure gesteigert wird. In Betracht kommen ferner modifizierte Vinylesterharze, beispielsweise solche gemäss DE-OS 2 534 039 (äquivalent zu US-PS 3 947 422) die Halbestergruppen enthalten und durch Reaktion der zweiten Hydroxylgruppe der Gruppierung $-CO-OHC_2 \cdot CHOH-CH_2O-$ mit einem Dicarbonsäureanhydrid, z.B. dem Anhydrid der Maleinsäure, Citraconsäure, Phthalsäure, Tetrabromphthalsäure u.a. erhalten werden.

Die erfindungsgemässen lichthärtbaren Form-, Tränk- und Überzugsmassen enthalten im allgemeinen 10 bis 80 Gew.-%, vorzugsweise 15 bis 70 Gew.-%, bezogen auf das Gesamtgewicht der Komponenten (a) und (b) eines ungesättigten Polyesters, eines urethangruppenhaltigen ungesättigten Polyesters oder eines ungesättigten Vinylesterharzes oder Mischungen der genannten Komponenten (a).

b) Als copolymerisierbare, äthylenisch ungesättigte monomere Verbindungen kommen die üblicherweise zum Herstellen ungesättigten Polyesterform-, Tränk- und Überzugsmassen verwendeten Allyl- und vorzugsweise Vinylverbindungen in Frage, wie Styrol, substituierte Styrole, wie p-Chlorstyrol oder Vinyltoluol, Ester der Acrylsäure und Methacrylsäure mit 1 bis 18 Kohlenstoffatomen enthaltenden Alkoholen, wie Methacrylsäuremethylester, Acrylsäurebutylester, Äthylhexylacrylat, Hydroxypropylacrylat, Dihydrodicyclopentadienylacrylat, Butandioldiacrylat und (Meth)-acrylsäureamide, Allylester, wie Diallylphthalat, und Vinylester wie Äthylhexansäurevinylester, Vinylpivalat und andere. Desgleichen eignen sich Gemische der genannten olefinisch ungesättigten Monomeren. Bevorzugt geeignet als Komponente (b) sind Styrol, $\alpha$-Methylstyrol, Chlorstyrol, Vinyltoluol, Divinylbenzol und Diallylphthalat. Die Komponente (b) ist in den Polyesterform-, Tränk- und Überzugsmassen im allgemeinen in einer Menge von 20 bis 90, vorzugsweise von 30 bis 85 Gew.-%, bezogen auf das Gesamtgewicht der Komponenten (a) und (b) enthalten.

c) Die erfindungsgemässen lichthärtbaren Form-, Tränk- und Überzugsmassen werden mit den üblichen Inhibitoren (c) stabilisiert. Beispielhaft genannt seien phenolische Inhibitoren, wie Hydrochinon, substituierte Hydrochinone, Brenzcatechin, tert.-Butylbrenzcatechin, kernsubstituierte Brenzcatechinderivate; Chinone, wie Benzochinon, Naphthochinon, Chloranil, Nitrobenzole, wie m-Dinitrobenzol, Thiodiphenylamin, N-Nitrosoverbindungen, wie N-Nitrosodiphenylamin und Salze von N-Nitroso-N-cyclohexylhydroxylamin sowie deren Gemische. Als zusätzliche Stabilisatoren eignen sich auch Salze des zweiwertigen Kupfers, beispielsweise Kupfer-naphthenate oder -octoat und quaternäre Ammoniumsalze der Struktur $[NR^5R^6,R^7R^8]^+ X^-$, in der $R^5$, $R^6$, $R^7$ und $R^8$ einen Alkylrest mit 1 bis 20 Kohlenstoffatomen, einen Arylrest mit 6 bis 14 Kohlenstoffatomen oder einen Aralkylrest mit 7 bis 30 Kohlenstoffatomen und X ein Halogenatom, vorzugsweise Chlorid bedeuten.

Der Zusatz ausgewählter UV-Absorber zur Lichtstabilisierung der Härtungsprodukte bewirkt in manchen Fällen eine geringe Herabsetzung der UV-Härtungsgeschwindigkeit, die aber noch in Kauf genommen werden kann. Geeignet sind solche aus den Reihen des Oxibenzophenons, der Salicylsäureester und des Oxiphenylbenztriazols.

Die Inhibitoren sind in den Form-, Tränk- und Überzugsmassen im allgemeinen in einer Menge von 0,005 bis 0,5, vorzugsweise 0,01 bis 0,2 Gew.-%, bezogen auf die Komponenten (a) und (b) enthalten.

d) Als UV-Sensibilisatoren (d) kommen erfindungsgemäss Acylphosphinoxid-Verbindungen der Formel

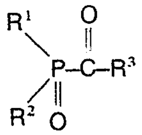 (I)

in Betracht. Als Acylphosphinoxid-Verbindungen sind beispielsweise zu nennen: Acylphosphinoxide und Acylphosphinsäureester. Bezüglich der Formel (I) ist im einzelnen folgendes auszuführen:

$R^1$ kann sein ein geradkettiger oder verzweigter Alkylrest mit 1 bis 6 C-Atomen, wie Methyl-, Äthyl-, i-Propyl-, n-Propyl, n-Butyl-, Amyl-, n-Hexyl-, Cyclopentyl-, Cyclohexyl-, Aryl-, wie Phenyl-, Naphthyl-, halogensubstituiertes Aryl, wie Mono- oder Dichlorphenyl-, alkylsubstituiertes Phenyl-, wie Methylphenyl-, Äthylphenyl-, Isopropylphenyl-, tert.-Butylphenyl-, Dimethylphenyl-, alkoxysubstituiertes Aryl-, wie Methoxyphenyl-, Äthoxyphenyl-, Dimethoxyphenyl-, S- oder N-haltige fünf- oder sechsgliedrige Ringe, wie Thiophenyl-, Pyridyl-,

$R^2$ kann die Bedeutung von $R^1$ haben und ferner sein ein Alkoxylrest mit 1 bis 6 C-Atomen, wie Methoxyl-, Äthoxyl-, i-Propoxyl-, Butoxyl-, Äthoxyäthoxyl-, Aryloxyrest, wie Phenoxy-, Methylphenoxy-, Benzyloxy-,

$R^1$ kann mit $R^2$ zu einem Ring verbunden sein, wie z.B. in Acyl-phosphonsäure-o-phenylenestern.

$R^3$ kann sein ein Äthyl-, i-Propyl-, n-Propyl-, n-Butyl-, i-Butyl-, tert.-Butyl-, i-Amyl-, n-Hexyl-, Heptyl-, n-Octyl-, 2-Äthylhexyl-, i-Nonyl-, Dimethylheptyl-, Lauryl-, Stearyl-, Cyclopropyl-, Cyclobutyl-, Cyclopentyl-, 1-Methylcyclopentyl-, Cyclohexyl-, 1-Methylcyclohexyl-, Norbornadienyl-, Adamantyl-, Phenyl-, Methylphenyl-, tert.-Butylphenyl-, Isopropylphenyl-, Methoxyphenyl-, i-Propoxyphenyl-, Thiomethoxyphenyl-, $\alpha$- und $\beta$-Naphthyl-, Thiophenyl-, Pyridyl-, $\beta$-Acetoxyäthyl- oder $\beta$-Carboxyäthylrest.

$R^1$, $R^2$ und $R^3$ können ausserdem C–C-Doppelbindungen enthalten, die es erlauben, den UV-Sensibilisator in das Bindemittel einzupolymerisieren.

Als Beispiele für die erfindungsgemässen UV-Sensibilisatoren seien genannt:

Isobutyryl-methylphosphinsäuremethylester
Isobutyryl-phenylphosphinsäuremethylester
Pivaloyl-phenylphosphinsäuremethylester
2-Äthylhexanoyl-phenylphosphinsäuremethylester
p-Toluyl-phenylphosphinsäuremethylester
o-Toluyl-phenylphosphinsäuremethylester
2,4-Dimethylbenzoyl-phenylphosphinsäuremethylester
p-tert.-Butylbenzoyl-phenylphosphinsäureisopropylester
Acryloyl-phenylphosphinsäuremethylester
Isobutyryl-diphenylphosphinoxid
2-Äthylhexanoyl-diphenylphosphinoxid
o-Toluyl-diphenylphosphinoxid
p-tert.-Butylbenzoyldiphenylphosphinoxid
3-Pyridylcarbonyl-diphenylphosphinoxid
Acryloyldiphenylphosphinoxid
Benzoyl-diphenylphosphinoxid
Pivaloyl-phenylphosphinsäurevinylester
Adipoyl-bis-diphenylphosphinoxid.

Vorzugsweise Anwendung finden:
Pivaloyl-diphenylphosphinoxid
p-Toluyl-diphenylphosphinoxid
4-(tert.-Butyl)-benzoyl-diphenylphosphinoxid
Terephthaloyl-bis-diphenylphosphinoxid
2-Methylbenzoyl-diphenylphosphinoxid
Versatoyl-diphenylphosphinoxid
2-Methyl-2-äthylhexanoyl-diphenylphosphinoxid
1-Methyl-cyclohexanoyl-diphenylphosphinoxid
Pivaloyl-phenylphosphinsäuremethylester und
Pivaloyl-phenylphosphinsäureisopropylester.

Die Herstellung derartiger Verbindungen gelingt durch Umsetzung von Säurehalogeniden der Formel

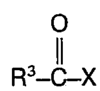 X = Cl, Br,

mit Phosphinen der Formel

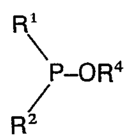

$R^4$ = geradkettiger oder verzweigter $C_1$- bis $C_6$-Alkyl, oder Cycloalkyl mit 5 oder 6 C-Atomen.

Die Umsetzung kann in einem Lösungsmittel, wie einem Kohlenwasserstoff oder Kohlenwasserstoffgemisch, wie Petroläther, Toluol, Cyclohexan, einem Äther, anderen üblichen inerten organischen Lösungsmitteln, oder auch ohne Lösungsmittel bei Temperaturen zwischen −30 und +110 °C, bevorzugt bei 10 bis 70 °C, ausgeführt werden. Das Produkt kann aus dem Lösungsmittel direkt auskristallisiert werden, hinterbleibt nach dem Abdampfen oder wird im Vakuum destilliert.

Die Gewinnung der Säurehalogenide $R^3\overset{\overset{O}{\|}}{C}X$ und des substituierten Phosphins $R^1R^2POR^4$ erfolgt nach Verfahren, die dem Fachmann aus der Literatur bekannt sind (z.B. K. Sasse in Houben-Weyl, Bd. 12/1, S. 208–209, G. Thieme-Verlag, Stuttgart).

Das Verfahren zur Herstellung der erfindungsgemässen Verbindungen lässt sich folgendermassen beispielhaft beschreiben:

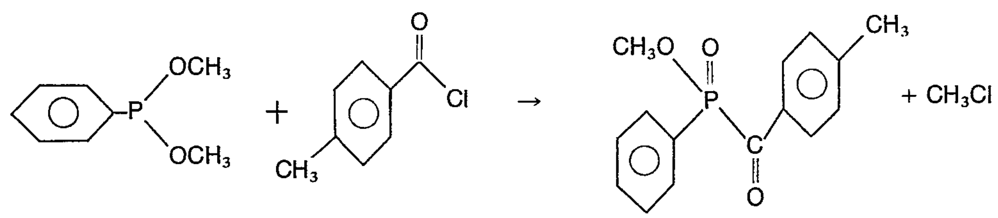

bzw.

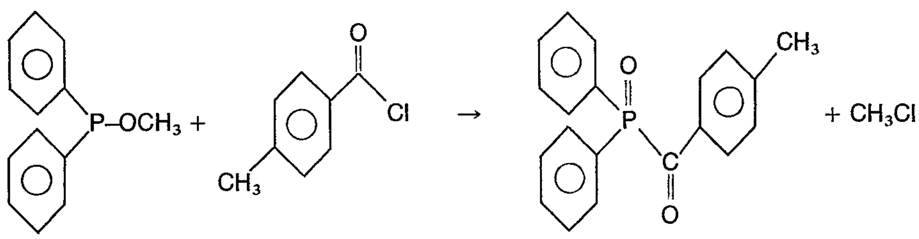

Geeignete Phosphine sind z. B. Methyl-dimethoxyphosphin, Butyl-dimethoxyphosphin, Phenyldimethoxyphosphin, Tolyl-dimethoxyphosphin, Phenyldiäthoxyphosphin, Tolyldiäthoxyphosphin, Phenyldiisopropoxyphosphin, Tolyldiisopropoxyphosphin, Phenyldibutoxyphosphin, Tolyldibutoxyphosphin bzw. Dimethylmethoxyphosphin, Dibutylmethoxyphosphin, Dimethylbutoxyphosphin, Diphenylpropoxyphosphin, Diphenylisopropoxyphosphin, Diphenylbutoxyphosphin oder ähnliche Ausgangsmaterialien, die zu den erfindungsgemässen Verbindungen führen.

Als Säurehalogenide eignen sich Chloride und Bromide, besonders bevorzugt sind jedoch Säurechloride.

Beispiele für die erfindungsgemässen Verbindungen sind insbesondere folgende (ohne dies als Beschränkung anzusehen) (siehe Tabelle 1; die Ausbeuten beziehen sich auf ein Herstellungsverfahren, das dem oben beschriebenen analog ist).

Besonders geeignet als UV-Sensibilisatoren für ungesättigte Polyesterharze sind Acyl-phenylphosphinsäureester bzw. Acyldiphenylphosphinoxide, deren Acylrest sich von einer sekundär- oder tertiär-substituierten aliphatischen Carbonsäure wie Pivalinsäure, 1-Methylcyclohexancarbonsäure, Norbornencarbonsäure, $\alpha,\alpha$-Dimethylalkancarbonsäuren (Versatic$^{(R)}$-Säure mit 9 bis 13 Kohlenstoffatomen), 2-Äthylhexancarbonsäure, oder von einer substituierten aromatischen Carbonsäure wie p-Methyl-benzoesäure, o-Methylbenzoesäure, 2,4-Dimethylbenzoesäure, p-tert.-Butylbenzoesäure, 2,4,5-Trimethylbenzoesäure, p-Methoxybenzoesäure oder p-Thiomethylbenzoesäure ableiten.

Die besonders bevorzugten, hochreaktiven UV-Sensibilisatoren sind solche der allgemeinen Formel I, bei denen
$R^3$ sein kann: ein Cycloalkyl-, Phenyl-, Naphthylrest, ein S-, N- oder O-haltiger fünf- oder sechsgliedriger heterocylischer Rest, z.B. ein Furyl-, Pyrrolyl-, Thienyl-, Pyranyl- oder Pyridylrest, der zumindest in den beiden ortho-Stellungen zur Carbonylgruppe die Substituenten A und B gebunden enthält, wobei A und B gleich oder verschieden sind und stehen für einen gegebenenfalls verzweigten Alkylrest mit 1 bis 6, vorzugsweise 1 bis 4 Kohlenstoffatomen, z.B. einen Methyl-, Äthyl-, Propyl-, iso-Propyl-, Butyl-, iso-Butyl- und tert.-Butylrest; ferner einen gegebenenfalls substituierten Cycloalkylrest, z.B. Cyclohexylrest, einen gegebenenfalls substituierten Arylrest, z.B. den Phenyl- oder Tolylrest, einen Alkoxy- oder Thioalkylrest mit 1 bis 6, vorzugsweise 1 bis 4 Kohlenstoffatomen im Alkylrest, z.B. den Methoxy-, Äthoxy-, Propoxy-, iso-Propoxy-, n-Butoxyrest, den Methylthio-, Äthylthio-, Propylthio-, iso-Propylthio-, n-Butylthio-, sec.-Butylthio- und tert.-Butylthiorest; eine Carbalkoxygruppe mit 1 bis 6, vorzugsweise 1 bis 4 Kohlenstoffatomen im Alkoholrest, z. B. die Carbomethoxy-, Carboäthoxy-, Carbopropoxy-, Carboisopropoxy-, Carbobutoxy- und Carbo-sec.-butoxygruppe, eine Cyanogruppe oder ein Halogenatom, beispielsweise ein Chlor-, Brom- oder Jodatom.

Die $R^3$ gebunden enthaltenden Acylphosphinoxid-Verbindungen können beispielsweise durch folgende Strukturformeln veranschaulicht werden,

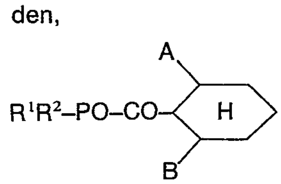

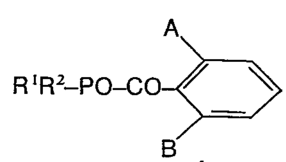

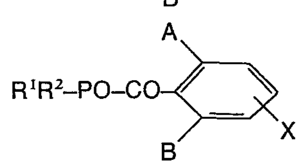

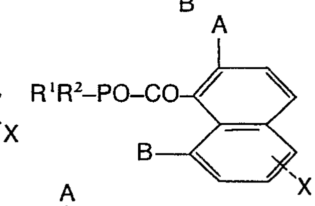

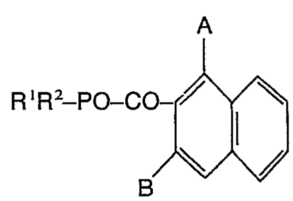

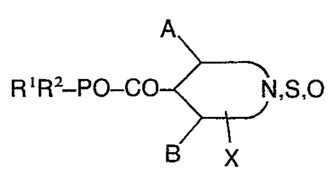

Tabelle 1
Beispiele der erfindungsgemässen Verbindungen (Ph = Phenyl)

| Verbindung | Schmp. | Sdp. | Ausbeute | Analyse | C | H | P |
|---|---|---|---|---|---|---|---|
| 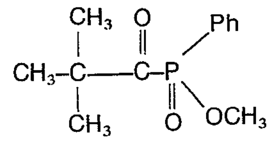 | – | 104/0,3 | 65% | ber.<br>gef. | 60,0<br>59,8 | 7,08<br>6,19 | 12,9<br>12,4 |
| 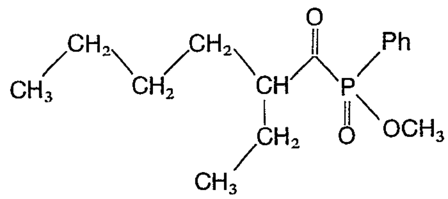 | – | 164/1,2 | 65% | ber.<br>gef. | 64,06<br>63,8 | 7,83<br>8,1 | 11,03<br>11,0 |
| 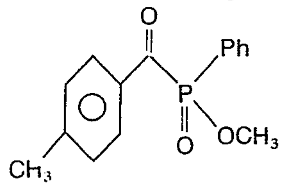 | 101 | – | 70% | ber.<br>gef. | 65,69<br>65,7 | 5,47<br>5,6 | 11,31<br>11,0 |
| 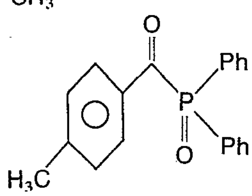 | 105 | – | 73% | ber.<br>gef. | 75,00<br>75,30 | 5,31<br>5,8 | 9,69<br>9,3 |
| 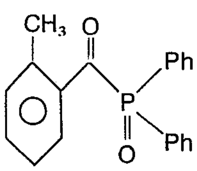 | 107 | – | 84% | ber.<br>gef. | 75,00<br>74,7 | 5,31<br>5,4 | 9,69<br>9,5 |
| 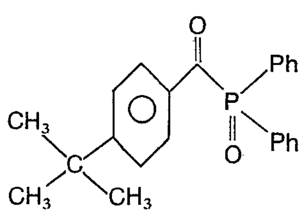 | 136 | – | 83% | ber.<br>gef. | 76,24<br>76,0 | 6,35<br>6,5 | 8,56<br>8,7 |
| 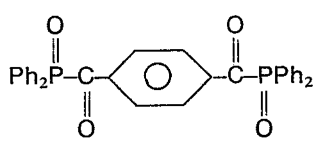 | 205 | – | 35% | ber.<br>gef. | 71,91<br>71,8 | 4,49<br>4,8 | 11,61<br>11,0 |
| 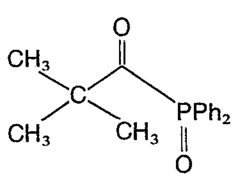 | 114 | – | 81% | ber.<br>gef. | 71,33<br>71,0 | 6,64<br>6,5 | 10,84<br>11,0 |
| 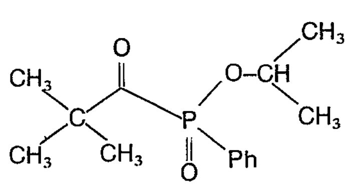 | – | 120/0,5 | 60% | ber.<br>gef. | 62,68<br>63,0 | 7,84<br>8,0 | 11,57<br>11,4 |

Tabelle 1 (Fortsetzung)
Beispiele der erfindungsgemässen Verbindungen (Ph = Phenyl)

| Verbindung | Schmp. | Sdp. | Ausbeute | Analyse | C | H | P |
|---|---|---|---|---|---|---|---|
| 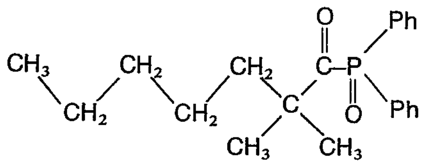 | – | – | 90% | ber. | 73,68 | 7,89 | 9,06 |
| | | | | gef. | 73,6 | 8,1 | 8,6 |
| 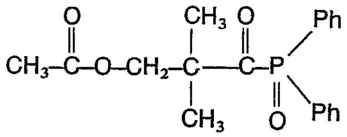 | – | – | 90% | ber. | 66,28 | 6,11 | 9,01 |
| | | | | gef. | 65,9 | 6,1 | 8,6 |
| 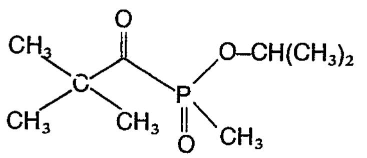 | – | 51/0,3 | 80% | ber. | 52,43 | 9,22 | 15,05 |
| | | | | gef. | 52,1 | 9,1 | 14,9 |
| 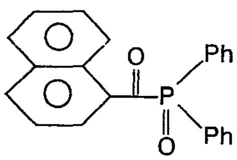 | 166 | – | 65% | ber. | 77,52 | 4,78 | 8,71 |
| | | | | gef. | 77,7 | 4,8 | 8,4 |
| 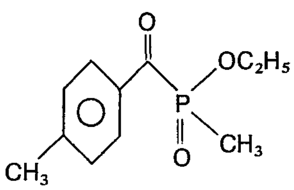 | – | 102/0,05 | 60% | ber. | 58,41 | 6,64 | 13,71 |
| | | | | gef. | 58,9 | 6,7 | 13,5 |
| 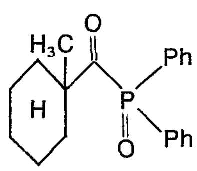 | 80 | – | 26% | ber. | 73,62 | 7,06 | 9,51 |
| | | | | gef. | 73,3 | 7,1 | 9,6 |
| 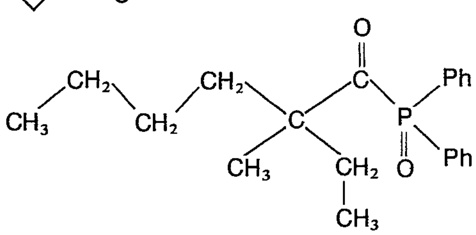 | – | – | 90% | ber. | 73,68 | 7,89 | 9,06 |
| | | | | gef. | 73,9 | 8,1 | 9,4 |

wobei X für gegebenenfalls weitere Substituenten in den Cycloalkyl-, Phenyl-, Naphthyl- oder heterocyclischen Resten steht, und die Bedeutung von A oder B hat.

Als Beispiele für derartige hochreaktive UV-Sensibilisatoren seien genannt:
2,6-Dimethylbenzoyl-phenylphosphinsäuremethylester
2,6-Dimethoxybenzoyl-phenylphosphinsäuremethylester
2,6-Dimethylbenzoyl-diphenylphosphinoxid
2,6-Dimethoxybenzoyl-diphenylphosphinoxid
2,4,6-Trimethylbenzoyl-phenylphosphinsäure methylester
2,4,6-Trimethylbenzoyl-diphenylphosphinoxid
2,3,6-Trimethylbenzoyl-diphenylphosphinoxid
2,4,6-Trimethylbenzoyl-tolylphosphinsäuremethylester
2,4,6-Trimethoxybenzoyl-diphenylphosphinoxid
2,6-Dichlorbenzoyl-phenylphosphinsäureäthylester
2,6-Dichlorbenzoyl-diphenylphosphinoxid

2-Chlor-6-methylthio-benzoyl-diphenylphosphinoxid
2,6-Dimethylthio-benzoyl-diphenylphosphinoxid
2,3,4,6-Tetramethylbenzoyl-diphenylphosphinoxid
2-Phenyl-6-methylbenzoyl-diphenylphosphinoxid
2,6-Dibrombenzoyl-diphenylphosphinoxid
2,4,6-Trimethylbenzoyl-naphthylphosphinsäureäthylester
2,6-Dichlorbenzoyl-naphthylphosphinsäureäthylester
1,3-Dimethylnaphthalin-2-carbonyl-diphenylphosphinoxid
2,8-Dimethylnaphthalin-1-carbonyl-diphenylphosphinoxid
1,3-Dimethoxynaphthalin-2-carbonyl-diphenylphosphinoxid
1,3-Dichlornaphthalin-2-carbonyl-diphenylphosphinoxid
2,4,6-Trimethylpyridin-3-carbonyl-diphenylphosphinoxid
2,4-Dimethylchinolin-3-carbonyldiphenylphosphinoxid
2,4-Dimethylfuran-3-carbonyl-diphenylphosphinoxid
2,4-Dimethoxyfuran-3-carbonyl-diphenylphosphinoxid
2,4,5-Trimethyl-thiophen-3-carbonyl-phenylphosphinsäuremethylester
2,4,5-Trimethyl-thiophen-3-carbonyl-diphenylphosphinoxid

Besonders bevorzugte hochreaktive UV-Sensibilisatoren sind Acyl-phenylphosphinsäureester und Acyldiphenylphosphinoxide, deren Acylreste sich von einer di-ortho-substituierten aromatischen Carbonsäure, wie 2,4,6-Trimethyl-benzoesäure, 2,6-Dimethoxy-benzoesäure, 2,6-Dichlorbenzoesäure oder 2,3,5,6-Tetramethylbenzoesäure ableiten, z.B.

2,4,6-Trimethylbenzoyl-diphenylphosphinoxid
2,6-Dimethoxybenzoyl-diphenylphosphinoxid
2,6-Dichlorbenzoyl-diphenylphosphinoxid
2,3,5,6-Tetramethyl-benzoyl-diphenylphosphinoxid
2,4,6-Trimethylbenzoyl-phenylphosphinsäuremethylester.

Die erfindungsgemäss verwendbaren Acylphosphinoxid-Verbindungen werden in Mengen von 0,005 bis 5 Gew.-%, vorzugsweise von 0,01 bis 3 Gew.-%, bezogen auf das Gewicht der ungesättigten Polyester (a) und äthylenisch ungesättigten monomeren Verbindungen (b) eingesetzt.

e) Als unter den Punkt (e) fallende Polyester- bzw. Vinylesterharzzusatzkomponenten kommen beispielsweise in Betracht: Verstärkungsmittel, Gleitmittel, inerte Lösungsmittel, schrumpfungsmindernde Zusätze und/oder weitere bei ungesättigten Polyestermassen verwendbare Hilfsstoffe.

Paraffine, die in den erfindungsgemässen lichthärtbaren Form-, Tränk- und Überzugsmassen zur Anwendung kommen, besitzen Schmelzpunkte von 25 bis 90 °C, vorzugsweise 45 bis 60 °C. Besonders bewährt und daher insbesondere verwendet wird ein Paraffin mit einem Schmelzpunkt von 46 bis 48 °C.

Anstelle der Paraffine können auch andere wachsartige Stoffe, beispielsweise die als sogenanntes Montanwachs bekannten Paraffinoxidationsprodukte bzw. deren Ester, Carnaubawachs, langkettige Fettsäuren, wie Stearinsäure, Stearylstearat, Ceresin u.dgl. eingesetzt werden.

Zur Verminderung der Monomerenverdunstung und zur Ausbildung einer klebfreien Oberfläche enthalten die ungesättigten Formmassen 0,01 bis 5 Gew.-%, vorzugsweise 0,05 bis 1 Gew.-%, insbesondere 0,1 bis 0,5 Gew.-% Paraffin, bezogen auf das Gesamtgewicht der Komponenten (a) und (b).

Geeignete Verdickungsmittel sind beispielsweise solche auf Basis von Erdalkalioxiden und -hydroxiden, wie Calciumoxid, Calciumhydroxid, Magnesiumhydroxid und vorzugsweise Magnesiumoxid sowie Gemische dieser Oxide bzw. Hydroxide. Diese können auch teilweise durch Zinkoxid ersetzt sein.

Der Gehalt der erfindungsgemässen Polyester- bzw. Vinylester-Formmassen an Verdickungsmitteln beträgt im allgemeinen 0,5 bis 5, vorzugsweise 1 bis 3 Gew.-%, bezogen auf die Mischung der Komponente (a) und (b).

Als zusätzliche Initiatoren kommen neben den erfindungsgemässen Acylphosphinoxid-Verbindungen beispielsweise in Betracht: Peroxide, z.B. Perester, wie tert.-Butylperoctoat, tert.-Butylperpivalat, Percarbonate wie Bis-(4-tert.-butylcyclohexyl)-peroxidicarbonat, Diacylperoxide, wie Benzoylperoxid, Dialkylperoxide, wie Di-tert.-butylperoxid und Dicumylperoxid, Hydroperoxide, wie Cyclohexanonperoxid, Methyläthylketonperoxid, Cumolhydroperoxid und tert.-Butylhydroperoxid gegebenenfalls in Kombination mit Metallbeschleunigern, z.B. Kobalt-II-salzen von Äthylhexansäure oder Naphthensäure; sowie Azoverbindungen, wie Azo-diisobuttersäuredinitril, Tetraphenyl-äthandiol und/oder $\alpha,\alpha,\alpha',\alpha'$-tetrasubstituierte Dibenzylberbindungen wie sie beispielsweise in Kunststoffe 66, 693 (1976) beschrieben sind. Dicke Laminataufbauten mit Glasfasern und Quarz-Sand, z.B. für Rohre, lassen sich vorteilhaft durch Strahlung dann härten, wenn neben den erfindungsgemässen Acylphosphinoxid-Verbindungen zusätzlich thermisch zerfallende Initiatoren in geringen Mengen, beispielsweise 0,05 bis 1 Gew.-%, vorzugsweise 0,1 bis 0,3 Gew.-%, bezogen auf das Gesamtgewicht der Komponenten (a) und (b) mitverwendet werden. Diese Initiatoren zerfallen durch die bei der Fotopolymerisation entstehende Wärme in Radikale, so dass die Härtung auch in tieferen Schichten ablaufen kann, die das UV-Licht nur ungenügend erfasst.

Besonders vorteilhaft ist auch der Einsatz von Fotoinitiatorkombinationen aus den erfindungsgemässen Acylphosphinoxid-Verbindungen und bekannten Fotoinitiatoren, beispielsweise aromatischen Ketonen, z.B. Benzilketalen, wie Benzildimethylketal, Benzoinäthern und -estern, wie Benzoinisopropyläthern, -Hydroxyisobutyrophenon, Diäthoxyacetophenon oder p-tert.-Butyltrichloracetophenon, aromatischen Disulfiden und Naphthalinsulfonylchloriden. Mit den genannten Fotoinitiatorkombinationen ist es in zahlreichen Fällen möglich, bei vergleichbaren Belichtungszeiten geringere Reststyrolgehalte von UP-Harzformstoffen zu erzielen, als mit den Acylphosphinoxid-Verbindungen allein, obwohl die Härtungsaktivität (gemessen am Temperaturanstieg der Harzprobe während der Belichtung) abfällt. Die Fotoinitiatorkombinationen enthalten zweckmässigerweise 15 bis 85 Gew.-%, vorzugsweise 25 bis 75 Gew.-% Acylphosphinoxid-Verbindungen und 15 bis 85 Gew.-%, vorzugsweise 25 bis 75 Gew.-% eines aromatischen Ketons, aromatische Disulfide und/oder Naphthalinsulfonylchlorid, wobei die Gewichtsprozente bezogen sind auf das Gesamtgewicht der Mischung. Die Kombinationen werden in Mengen von 0,005 bis 7 Gew.-%, vorzugsweise von 0,01 bis 4 Gew.-%, bezogen auf das Gewicht der Komponenten (a) und (b) eingesetzt.

Den erfindungsgemässen, härtbaren ungesättigten Form-, Tränk- und Überzugsmassen werden ausserdem meistens übliche Füllstoffe, Verstärkungsstoffe, Gleitmittel, inerte Lösungsmittel, schrumpfungsmindernde Zusätze sowie gegebenenfalls weitere Hilfsstoffe zugesetzt.

Geeignete Füllstoffe sind z.B. übliche feinpulverige oder körnige anorganische oder organische Füllstoffe, die für längerwelliges UV-Licht durchlässig sind, wie Aluminiumoxidhydrat, Quarzsand, feindisperse Kieselsäure, Asbeste, Talkum, Bariumsulfat, Leichtspat (Calciumsulfat) und Glimmer.

Als Verstärkungsstoffe kommen in Frage anorganische oder organische Fasern oder flächige, gegebenenfalls daraus gewebte Gebilde, wie Matten, z.B. solche aus Glas, Asbest, Zellulose und synthetischen organischen Hochpolymeren, wie Polyamid, Polyacrylnitril und Polyestern, beispielsweise Terephthalaten.

Die Füllstoffe und Verstärkungsstoffe können in Mengen von 5 bis 200 Gew.-%, vorzugsweise 10 bis 70 Gew.-%, bezogen auf das Gesamtgewicht der Komponenten (a) und (b) verwendet werden. In vielen Fällen ist eine Kombination von pulverigen und faserigen Füllstoffen günstig (z.B. für die Behälterherstellung). Nach dem Laminierprozess kann das Laminat mit einer für UV-Strahlung durchlässigen Folie abgedeckt und mit energiearmer UV-Strahlung aus Leuchtstoffröhren (z.B. TAK 40 W/05, Philips) über längere Zeit oder mit Hg-Dampfhochdrucklampen (HOK 6, 80 W/cm, Philips) in sehr kurzer Zeit gehärtet werden.

Als Gleitmittel kommen beispielsweise Zink-, Magnesium- und Calciumstearat sowie Polyalkylenätherwachse in Betracht. Als weiterhin gegebenenfalls mitzuverwendende inerte Lösungsmittel kommen Ketone, Ester, Kohlenwasserstoffe in Mengen bis zu 100 Gew.-%, bezogen auf die Komponenten (a), in Frage. Als gegebenenfalls zusätzlich mitzuverwendende schrumpfungsmindernde Zusätze kommen beispielsweise thermoplastische Polymere, wie Polystyrol, Styrolcopolymerisate, Polyvinylacetat oder Poly(meth)acrylate in Mengen von 1 bis zu etwa 30 Gew.-%, bezogen auf die Komponenten (a) und (b), in Betracht.

Als Strahlungsquellen zur Härtung der Form-, Tränk- und Überzugsmassen sind beispielsweise Leuchtstoffröhren, Quecksilberhochdruckstrahler sowie direktes Sonnenlicht zu nennen.

Die erfindungsgemässen Form-, Tränk- und Überzugsmassen können auf vielen technischen Gebieten verwendet werden. Geeignet sind sie beispielsweise als

1. Feinschichtharze

Die nur etwa 0,5 mm dicken Feinschichten dienen zum Schutz des dahinterliegenden Laminates mit seiner hydrolyseempfindlichen Glasfaser. Diese Harze müssen hohe Anforderungen an die Härtungsaktivität erfüllen und die Formstoffe dürfen nur eine geringe Vergilbung aufweisen. Die transparenten Feinschichten werden durch Spritzen oder Streichen auf eine Form gebracht, anschliessend durch UV-Strahlung angeliert oder gehärtet und anschliessend die glasfaserhaltige Formmasse aufgetragen.

2. Faserverstärkte Formstoffe

a) Lichtplatten für den Bausektor zeichnen sich durch eine hohe Transparenz und eine geringe Vergilbung aus. Zur Herstellung von planen, längs- oder quergewellten Lichtplatten sind kontinuierlich arbeitende Maschinen im Einsatz. Mit den lichtstabilisierten UP-Harzen werden Glasseidenmatten zwischen Abdeckfolien getränkt, entlüftet und schliesslich durch Kalthärtung verfestigt. Durch den Einsatz der erfindungsgemässen Acylphosphinoxid-Initiatoren lässt sich die Härtung auch rationeller durch UV-Strahlung von Hg-Dampfhochdruckstrahlern oder auch sogenannten Blaulichtlampen bewerkstelligen (Lit. über Lichtplattenherstellung: P.H. Selden, «Glasfaserverstärkte Kunststoffe», Seite 610, Springer-Verlag Berlin-Heidelberg-New York, 1967).

b) Diskontinuierliche Verfahren zur Herstellung von faserverstärkten, insbesondere glasfaserverstärkten Formstoffen, die für die UV-Härtung in Frage kommen, sind: Handauflegeverfahren, Faserspritz-, Schleuder- und Wickelverfahren (Beschreibung s. P.H. Selden, Glasfaserverstärkte Kunststoffe»).

Gebrauchsgegenstände, die nach diesen Verfahren hergestellt werden können, sind beispielsweise Boote, Containerplatten (beidseitig mit glasfaserverstärktem Kunststoff beschichtete Span- oder Tischlerplatten), Rohre, Behälter.

c) UP-Harz-Feinschichten für glasfaserhaltige Formstoffe (GFK) und Papierlaminate.

Die Oberflächenqualität von GFK und Papierlaminaten kann durch Aufbringen einer Feinschicht erheblich verbessert werden. Folgende Vorteile sind zu erreichen:

1. GFK-Laminate wie z.B. Wellplatten:
   a) Längere Glanzerhaltung bei der Freibewitterung und damit geringere Verschmutzung.

b) Geringer Abfall der Transparenz bei der Freibewitterung durch Schutz der Grenzfläche Glas-Harz.

2. Papierlaminate auf Basis von ungesättigten Polyester-, Harnstoff- oder Melaminharzen:
   a) Erhöhung des Oberflächenglanzes.
   b) Griffunempfindlichere Oberflächen gegenüber solchen aus Melaminharzen.
   c) Durch die hohe Transparenz der UP-Feinschicht entsteht der optische Eindruck wie bei einer mit Klarlack beschichteten Oberfläche.

Die Feinschicht selbst muss vor der Laminatherstellung auf einem Träger (z.B. Folie) erzeugt werden. Dazu zieht man auf eine Trennfolie eine 20 bis 200 $\mu$m dicke UP-Harzschicht auf, die anschliessend UV-gehärtet wird. Die vollständige Aushärtung erfolgt anschliessend bei der Härtung des Laminats.

Die Feinschichtherstellung nach bekannten Verfahren weist folgende Nachteile auf:
   a) Bei der Härtung mit organischen Peroxiden in der Wärme sind hohe Styrolverluste zu verzeichnen, so dass die Gefahr einer Unterhärtung besteht.
   b) Bei der Härtung mit Peroxid und Beschleuniger in der Wärme lassen sich die Styrolverluste zwar reduzieren, nachteilig erweisen sich aber die geringere Verarbeitungszeit (30 bis 60 Minuten) und die durch den Beschleuniger (Co-Salze) hervorgerufene Eigenfarbe des Formstoffs.
   c) Die UV-Härtung mit bekannten Fotoinitiatoren führt zu gelblichen Feinschichten; die Vergilbung wird bei einer Freibewitterung noch verstärkt.

Mit den erfindungsgemässen Formmassen treten die geschilderten Mängel der anderen Verfahren nicht auf. Vielmehr werden durch rasche Härtung mit UV-Licht fast farblose Feinschichten erhalten, die weder am Tageslicht noch unter Kunstlicht vergilben.

3. Einbettungen

Zum Einsatz bei Giessharzen, die für Einbettungen von beispielsweise Elektronikteilen verwendet werden können, sind die neuen Sensibilisatoren hervorragend geeignet. Bei der Einbettung von lichtundurchlässigen Objekten muss für eine gleichmässige, allseitige Belichtung gesorgt werden.

Die in den Beispielen genannten Teile und Prozente beziehen sich, soweit nicht anders angegeben, auf das Gewicht. Volumenteile verhalten sich zu Teilen wie Liter zu Kilogramm.

Die Beispiele und Vergleichsbeispiele wurden mit folgenden ungesättigten Polyesterharzen durchgeführt:

Harz A ist eine mit 0,01% Hydrochinon stabilisierte 65%ige styrolische Lösung eines ungesättigten Polyesters aus Maleinsäure, o-Phthalsäure, Äthylenglykol und Propylenglykol-1,2 im Molverhältnis 1:2:2, 4:0,70. Der ungesättigte Polyester hat eine Säurezahl von 50.

Harz B ist eine mit 0,01% Hydrochinon stabilisierte 67%ige styrolische Lösung eines ungesättigten Polyesters aus Maleinsäure, Tetrahydrophthalsäure und Diäthylenglykol im Molverhältnis 1:0,5:1,5. Der ungesättigte Polyester hat eine Säurezahl von 43.

Harz C ist eine mit 0,01% Hydrochinon stabilisierte 66%ige styrolische Lösung eines ungesättigten Polyesters aus Maleinsäure, o-Phthalsäure und Propylenglykol-1,2 im Molverhältnis 1:0,5:1,5. Der ungesättigte Polyester hat eine Säurezahl von 50.

Harz D ist eine mit 0,01% Hydrochinon stabilisierte 65%ige styrolische Lösung eines ungesättigten Polyesters aus Maleinsäure, Isophthalsäure, Propylenglykol-1,2 und Diäthylenglykol im Molverhältnis 1:0,67:0,72:1. Der ungesättigte Polyester hat eine Säurezahl von 26.

Harz E ist eine mit 0,01% Hydrochinon stabilisierte 65%ige styrolische Lösung eines ungesättigten Polyesters aus Fumarsäure, Adipinsäure, Neopentylglykol und Propylenglykol-1,2 im Molverhältnis 1:1:1,7:0,35. Der ungesättigte Polyester hat eine Säurezahl von 17.

Harz F ist eine Mischung aus 55% Harz A und 45% einer 65%igen, mit 0,01 Hydrochinon stabilisierten styrolischen Lösung eines ungesättigten Polyesters aus Maleinsäure, Adipinsäure, Propylenglykol-1,2 und Diäthylenglykol im Molverhältnis 1:0,5:0,55:1, der eine Säurezahl von 30 aufweist.

Harz G ist eine mit 0,012% Hydrochinon stabilisierte 65%ige styrolische Lösung eines ungesättigten Polyesters aus Maleinsäure, o-Phthalsäure, Propylenglykol-1,2 und Diäthylenglykol im Molverhältnis 1:0,25:1:0,25. Der ungesättigte Polyester hat eine Säurezahl von 43.

Harz H ist eine mit 0,01% Hydrochinon stabilisierte 65%ige styrolische Lösung eines ungesättigten Polyesters aus Maleinsäure, o-Phthalsäure und Propylenglykol-1,2 im Molverhältnis 1:1:2. Der ungesättigte Polyester hat eine Säurezahl von 52.

Harz J ist eine mit 0,01% Hydrochinon stabilisierte 65%ige styrolische Lösung eines ungesättigten Polyesters aus Maleinsäure, o-Phthalsäure und Propylenglykol-1,2 im Molverhältnis 1:2:3. Der ungesättigte Polyester hat eine Säurezahl von 30.

Harz K Handelsübliches Vinylesterharz (® Derakane 411–45 der Dow Chemical Co., Midland, Mich. USA).

Als UV-Sensibilisatoren wurden für Vergleichsbeispiele folgende zum Stand der Technik gehörende Verbindungen eingesetzt:

I Benzildimethylketal
II Benzoinmethyläther
III Benzoinisopropyläther
IV Methylolbenzoinmethyläther.

Die erfindungsgemässen Beispiele wurden mit folgenden Acylphosphinoxiden und Acylphosphinsäureestern durchgeführt:

X Pivaloyl-diphenylphosphinoxid
XI p-Toluyl-diphenylphosphinoxid

XII 4-(tert.-Butyl)-benzoyl-diphenylphosphinoxid
XIII Terephthaloyl-bis-diphenylphosphinoxid
XIV 2-Methylbenzoyl-diphenylphosphinoxid
XV Versatoyl-diphenylphosphinoxid
XVI 2-Methyl-2-äthylhexanoyl-diphenylphosphinoxid
XVII 1-Methyl-cyclohexanoyl-diphenylphosphinoxid
XVIII Povaloyl-phenylphosphinsäuremethylester
XIX Pivaloyl-phenylphosphinsäureisopropylester

Als hochreaktive UV-Sensibilisatoren wurden folgende Acylphosphinoxide eingesetzt:

XX 2,4,6-Trimethylbenzoyl-diphenylphosphinoxid
XXI 2,6-Dimethoxybenzoyl-diphenylphosphinoxid
XXII 2,6-Dichlorbenzoyl-diphenylphosphinoxid
XXIII 2,3,5,6-Tetramethylbenzoyl-diphenylphosphinoxid
XXIV 2,4,6-Trimethylbenzoyl-phenylphosphinsäuremethylester.

Die erfindungsgemäss verwendeten Acylphosphinoxid-Verbindungen wurden auf folgende Weise hergestellt:

X Pivaloyl-diphenylphosphinoxid

Zu einer Mischung aus 1350 Volumenteilen Petroläther (Siedebereich 40 bis 70 °C), 180 Volumenteilen N,N-Diäthylanilin und 67 Volumenteilen Methanol werden unter Rühren bei 0 °C 225 Teile Diphenylchlorphosphin, gelöst in 220 Volumenteilen Petroläther, zugegeben. Danach rührt man die Mischung noch 2 Stunden bei Raumtemperatur. Nach Abkühlung auf etwa +5 °C saugt man das ausgeschiedene Aminhydrochlorid ab und destilliert das Filtrat zunächst bei 10 bis 20 Torr, um alles Leichtsiedende zu entfernen. Sodann wird das Methoxy-diphenylphosphin bei 0,1 bis 1 Torr fraktioniert destilliert. $Sdp._{0,5}$ 120 bis 124 °C. Ausbeute: 175 Teile (80% bezogen auf Diphenylchlorphosphin).

Zu 36,2 Teilen Pivaloylchlorid tropft man unter Rühren bei 30 bis 60 °C 64,8 Teile Methoxy-diphenylphosphin zu. Nach vollendeter Zugabe lässt man noch 30 Minuten nachreagieren, kühlt auf 0 bis 10 °C ab und kristallisiert das ausgefallene Produkt aus Cyclohexan um.

Ausbeute: 69,5 Teile Pivaloyldiphenylphosphinoxid (81% d.Th.).

Schmp. 110 bis 112 °C, NMR ($CDCl_3$,δ), 1,33 (s), 7,4–8,0 (m)

Analyse $C_{17}H_{19}O_3P$ (286):

| | | | |
|---|---|---|---|
| ber.: | C 71,33 | H 6,64 | P 10,84 |
| gef.: | C 70,0 | H 6,5 | P 11,0 |

XI p-Toluyl-diphenylphosphinoxid

Zu 77 Teilen Toluylsäurechlorid werden 108 Teile Methoxydiphenylphosphin (wie oben beschrieben), gelöst in 200 Volumenteilen Toluol, zugegeben. Danach wird 60 Minuten auf 50 °C erwärmt, dann abgekühlt, der Niederschlag von Toluyldiphenylphosphinoxid abgesaugt und aus Cyclohexan umkristallisiert.
Ausbeute 117 Teile (73% d.Th.), Schmp. 105 °C

NMR ($CDCl_3$, δ): 2,35 (s); 7,2–8 (m)

Analyse $C_{20}H_{17}O_2P$ (320):

| | | | |
|---|---|---|---|
| ber.: | C 75,00 | H 5,31 | P 9,69 |
| gef.: | C 75,3 | H 5,8 | P 9,3 |

XII 4-(tert.Butyl)-benzoyl-diphenylphosphinoxid

In Analogie zu X werden 41,3 Teile p-tert.-Butylbenzoesäurechlorid mit 45,4 Teilen Methoxydiphenylphosphin, gelöst in 20 Teilen Toluol, bei 50 °C in 90 Minuten umgesetzt. Nach dem Abdampfen des Lösungsmittels am Rotations-Verdampfer wird aus Cyclohexan umkristallisiert.
Ausbeute: 63 Teile (83% d.Th.), Schmp. 136 °C

NMR ($CDCl_3$, δ): 1,3 (s); 7,3–8,1 (m); 8,5 (d).

Analyse $C_{23}H_{23}O_2P$ (362):

| | | | |
|---|---|---|---|
| ber.: | C 76,24 | H 6,35 | P 8,56 |
| gef.: | C 76,0 | H 6,5 | P 8,7 |

XIII Terephthaloyl-bis-diphenylphosphinoxid

In Analogie zu XI werden aus 52 teilen Terephthalsäuredichlorid, gelöst in 200 Teilen Toluol, 108 Teilen Methoxydiphenylphosphin 46 Teile Terephthaloyl-bis-diphenylphosphinoxid hergestellt.
Ausbeute 35% d. Th., Schmp. 205 °C.

NMR ($CDCl_3$, δ): 6,8–8,2 (m)

Analyse $C_{32}H_{24}O_4P_2$ (534):

| | | | |
|---|---|---|---|
| ber.: | C 71,91 | H 4,49 | P 11,61 |
| gef.: | C 71,8 | H 4,8 | P 11,0 |

XIV 2-Methylbenzoyl-diphenylphosphinoxid

In Analogie zu XI werden aus 77 Teilen 2-Methyl-benzoesäurechlorid und 108 Teilen Methoxydiphenylphosphin 134 Teile 2-Methylbenzoyldiphenylphosphinoxid hergestellt.
Ausbeute 84% d. Th., Schmp. 107 °C

NMR ($CDCl_3$, δ): 2,5 (s); 7,2–8 (m); 8,8 (m)

Analyse $C_{20}H_{17}O_2P$ (320):

| | | | |
|---|---|---|---|
| ber.: | C 75,00 | H 5,31 | P 9,69 |
| gef.: | C 74,7 | H 5,4 | P 9,5 |

XV Versatoyl-diphenylphosphinoxid

Analog zu X tropft man bei 50 °C 43,2 Teile Methoxydiphenylphosphin zu 35,3 Teilen 2,2-Dimethyl-heptan-carbonsäurechlorid (Versatic(R)-Säurechlorid). Man rührt 3 Stunden bei 50 °C, kühlt auf 15 °C ab und rührt die Mischung in eine Aufschlämmung von 60 g Kieselgel in 350 ml Toluol ein, rührt noch eine Stunde unter Eiskühlung. Dann wird abgesaugt und das Lösungsmittel unter vermindertem Druck abdestilliert. Versatoyl-diphenylphosphinoxid hinterbleibt als viskoses Öl.
Ausbeute: 62 Teile (90% d.Th.)

NMR ($CDCl_3$, $\delta$): 0,4–2,3 (m); 7,2–8,1 (m)

Analyse $C_{21}H_{27}O_2P$ (342):

| | | | |
|---|---|---|---|
| ber.: | C 73,68 | H 7,89 | P 9,06 |
| gef.: | C 73,6 | H 8,1 | P 8,6 |

XVI 2-Methyl-2-äthylhexanoyl-diphenylphosphinoxid

In Analogie zu X werden aus 88 Teilen 2-Methyl-2-äthylhexansäurechlorid und 108 Teilen Methoxydiphenylphosphin 165 Teile 2-Methyl-3-äthyl-hexanoyl-diphenylphosphinoxid als öliges Rohprodukt erhalten. Durch Säulenchromatographie an Kieselgel 60 (Laufmittel: Toluol/Äther 3:1) erhält man das Produkt als leicht gelbliches Öl.
Ausbeute: 154 Teile (90% d.Th.)

NMR ($CDCl_3$, $\delta$): 1,2 (s); 0,5–2,2 (m); 7,3–8,1 (m)

Analyse $C_{21}H_{27}O_2P$ (342):

| | | | |
|---|---|---|---|
| ber.: | C 73,68 | H 7,89 | P 9,06 |
| gef.: | C 73,9 | H 8,1 | P 9,4 |

XVII 1-Methyl-cyclohexanoyl-diphenylphosphinoxid

In der Arbeitsweise wie nach XI werden aus 80 Teilen 1-Methyl-1-cyclohexancarbonsäurechlorid und 108 Teilen Methoxydiphenylphosphin ohne Lösungsmittel 100 Teile 1-Methyl-cyclohexanoyl-diphenylphosphinoxid als öliges Rohprodukt erhalten, das durch Chromatographieren an Kieselgel (Laufmittel Toluol) gereinigt wird.
Ausbeute: 42 Teile (26% d.Th.), Schmp. 80 °C

NMR ($CDCl_3$, $\delta$): 14 (s); 1,1–1,6 (m); 2,1–2,4 (m); 7,3–8,0 (m)

Analyse $C_{20}H_{23}O_2P$ (326):

| | | | |
|---|---|---|---|
| ber.: | C 73,62 | H 7,06 | P 9,51 |
| gef.: | C 73,3 | H 7,1 | P 9,6 |

XVIII Pivaloyl-phenylphosphinsäuremethylester

Zu einer Mischung aus 1000 Volumenteilen Toluol, 421 Volumenteilen N,N-Diäthylanilin und 100 Volumenteilen Methanol werden bei 0 °C 214 Teile Phenyldichlorphosphin zugegeben. Danach rührt man noch 1 Stunde bei Raumtemperatur, saugt den Niederschlag von Aminhydrochlorid ab und fraktioniert. Das Dimethoxyphenylphosphin destilliert bei 46 bis 50 °C/0,2 bis 0,3 mm.
Ausbeute: 190 Teile (93% d.Th.)

Zu 78,7 Teilen Pivaloylchlorid werden bei 15 °C 110,5 Teile Dimethoxyphenylphosphin zugetropft. Man erwärmt danach noch 30 Minuten auf 50 °C und destilliert dann das Reaktionsgemisch. Pivaloylphenylphosphinsäuremethylester geht bei 104 bis 107 °C/0,3 mm über.
Ausbeute: 101,3 Teile (65% d.Th.)

NMR ($CDCl_3$, $\delta$): 1,3 (s); 3,75 (d); 7,4–8 (m)

XIX Pivaloyl-phenylphosphinsäureisopropylester

Zu einer Mischung aus 600 Volumenteilen Petroläther, 263 Teilen N,N-Diäthylanilin und 120 Teilen Isopropanol tropft man innerhalb einer Stunde bei 0 °C 143 Teile Phenyldichlorphosphin. Danach wird noch eine Stunde bei Raumtemperatur gerührt, und dann nach Aufarbeitung wie in Beispiel 1 beschrieben, destilliert. Das Diisopropoxy-phenylphosphin destilliert bei 68 bis 72 °C/ 0,3 mm.
Ausbeute: 126 Teile (69% d.Th.)

158 Teile Diisopropoxyphenylphosphin werden unter gutem Rühren bei 50 bis 60 °C langsam zu 84 Teilen Pivalinsäurechlorid zugegeben. Man rührt weitere zwei Stunden und fraktioniert im Vakuum. Pivaloyl-phenylphosphinsäureisopropylester destilliert bei 119 bis 121 °C/0,5 mm.
Ausbeute: 112 Teile (60% d.Th.)

NMR ($CDCl_3$, $\delta$): 125 (s); 1,33 (t); 4,5 (m); 7,3–8 (m)

Analyse $C_{14}H_{21}O_3P$ (268):

| | | | |
|---|---|---|---|
| ber.: | C 62,68 | H 7,84 | P 11,57 |
| gef.: | C 63,0 | H 8,0 | P 11,4 |

XX 2,4,6-Trimethylbenzoyl-diphenylphosphinoxid

In einer Rührapparatur mit Rückflusskühler und Tropftrichter werden bei 50 bis 55 °C 648 Teile Methoxydiphenylphosphin zu 547,5 Teilen 2,4,6-Trimethylbenzoylchlorid langsam zugegeben. Man rührt noch 4 bis 5 Stunden bei 50 °C nach, löst den Kolbeninhalt bei 30 °C in Äther und versetzt bis zur beginnenden Trübung mit Petroläther. Beim Abkühlen kristallisieren 910 Teile (87% d.Th.) 2,4,6-Trimethylbenzoyl-diphenylphosphinoxid. Fp: 80 bis 81 °C, schwach gelbe Kristalle.

XXI 2,6-Dimethoxybenzoyl-diphenylphosphinoxid

In einer Apparatur wie bei der Herstellung des Initiator XX beschrieben, werden 20 Teile 2,6-Dimethoxybenzoylchlorid in 20 Volumenteilen Toluol suspendiert und zu dieser Mischung bei 50 bis 55 °C unter Rühren 21,6 Teile Methoxydiphenylphosphin zugetropft. Man rührt noch 3 Stunden bei 50 °C nach und kristallisiert dann direkt aus Toluol um. Man erhält 32 Teile gelbliche Kristalle, Fp: 124–126 °C.

Weitere hochwirksame Initiatoren, die nach analoger Herstellungsweise synthetisiert wurden, finden sich in Tabelle 2.

Tabelle 2
Beispiele hochwirksamer Acylphosphinoxid-Derivate

| | | Ausbeute | Sdp. (mm) | Fp. [°C] | | Analyse C | H | P |
|---|---|---|---|---|---|---|---|---|
| XX | 2,4,6-Trimethylbenzoyl-diphenylphosphinoxid | 87% | – | 80–81 | ber. | 75,86 | 6,03 | 8,91 |
| | | | | | gef. | 75,9 | 6,1 | 8,9 |
| XXI | 2,6-Dimethoxybenzoyl-diphenylphosphinoxid | 88% | – | 124–126 | ber. | 68,85 | 5,19 | 8,47 |
| | | | | | gef. | 68,7 | 5,4 | 8,2 |
| XXII | 2,6-Dichlorbenzoyl-diphenylphosphinoxid | 82% | – | 154–159 | ber. | 60,8 | 3,47 | 8,27 |
| | | | | | gef. | 60,9 | 3,7 | 8,1 |
| XXIII | 2,3,5,6-Tetramethylbenzoyl-diphenylphosphinoxid | 63% | – | 123–125 | ber. | 76,24 | 6,36 | 8,56 |
| | | | | | gef. | 76,2 | 6,5 | 8,4 |
| XXIV | 2,4,6-Trimethylbenzoyl-phenylphosphinsäuremethylester | 81% | – | 51–52 | ber. | 67,55 | 6,29 | 10,26 |
| | | | | | gef. | 67,5 | 6,5 | 10,1 |

UV-Härtungsaktivität

Zur Messung der Härtungsaktivität wurde der Temperaturverlauf im ungesättigten Polyesterharz (UP-Harz) bzw. Vinylesterharz während der UV-Belichtung aufgezeichnet; dazu tauchte ein mit einer Wachsschicht überzogener Thermofühler, der mit einem Temperaturschreiber (Tastotherm Script 3 N, Standardfühler T 300 der Deutschen Gulton GmbH) verbunden war, in einen mit 10 g UP-Harz gefüllten Weissblechdeckel mit einem Durchmesser von 5 cm (Schichtdicke des UP-Harzes 4,8 mm). Zur Vermeidung von Wärmeverlusten während der UV-Belichtung war der Deckel in Polyurethan-Hartschaum eingebettet. Als Strahlungsquelle diente ein UV-Feld aus 5 Leuchtstoffröhren (TLAK 40 W/05, Philips) nebeneinander. Der Abstand Strahler/UP-Harzoberfläche betrug 8,5 cm.

Aus den registrierten Temperatur-Zeitkurven wurden als charakteristische Kenngrössen für die Härtungsaktivität die Härtungszeit $HZ_{25\,°C-T\,max}$ und die maximal erreichte Härtungstemperatur $T_{max}$ entnommen. Als Härtungszeit gilt die Zeitspanne, in der die Probentemperatur von 25 °C auf $T_{max}$ ansteigt. Die Härtungszeit ist in den folgenden Tabellen mit der Dimension [min/sec] angegeben. Dabei bedeutet z. B. 8/10 [min/sec] 8 Minuten und 10 Sekunden.

Beispiel 1

Zubereitungen aus Harz C mit 0,2% verschiedener Sensibilisatoren wurden in der oben beschriebenen Weise mit UV-Licht gehärtet.

Ein Vergleich der Härtungsaktivität (Tabelle 3)

Tabelle 3
UV-Härtung von Harz C mit 0,2% verschiedener Sensibilisatoren in 4,8 mm dicker Schicht

| UV-Sensibilisator | HZ25 °C–$T_{max}$ [min/s] | $T_{max}$ [°C] |
|---|---|---|
| I | 8/10 | 123 |
| II | 10/25 | 119 |
| III | 11/50 | 110 |
| IV | 10/00 | 123 |
| X | 7/15 | 125 |

zeigt, dass mit dem erfindungsgemässen Initiator X die schnellste Härtung möglich ist; danach folgt Benzildimethylketal (I) als günstigster von den literaturbekannten und zum Teil handelsüblichen Produkten. In weiteren Vergleichsversuchen wurde daher vorwiegend mit diesem Initiator gearbeitet.

Beispiel 2

Tabelle 4
UV-Härtungsaktivität erfindungsgemässer Sensibilisatoren im Vergleich zu Benzildimethylketal (I)

| Harz | Sensibilisatoren | (%) | HZ25 °C–$T_{max}$ [min/s] | $T_{max}$ [°C] |
|---|---|---|---|---|
| A | X | 0,2 | 5/36 | 122 |
| | XI | 0,2 | 15/00 | 124 |
| | XI | 0,35 | 15/15 | 122 |
| | XII | 0,35 | 14/45 | 120 |
| | XIII | 0,35 | 21/15 | 109 |
| | XIV | 0,35 | 8/15 | 117 |
| | XV | 0,2 | 13/45 | 90 |
| | XV | 0,35 | 16/15 | 86 |
| | XVI | 0,2 | 15/15 | 90 |
| | XVI | 0,35 | 16/00 | 88 |
| | XVII | 0,2 | 10/40 | 96 |
| | XVII | 0,35 | 11/05 | 98 |
| | XVIII | 0,35 | 18/15 | 106 |
| | XIX | 0,35 | 39/25 | 85 |
| | I | 0,2 | 6/54 | 120 |
| B | X | 0,2 | 5/50 | 127 |
| | X | 0,35 | 4/40 | 126 |
| | XI | 0,35 | 10/05 | 133 |
| | XVIII | 0,35 | 13/00 | 112 |
| | I | 0,2 | 5/30 | 128 |
| C | X | 0,2 | 7/15 | 125 |
| | XVIII | 0,35 | 18/45 | 112 |
| | I | 0,2 | 8/15 | 136 |
| D | X | 0,2 | 5/45 | 123 |
| | I | 0,2 | 8/00 | 128 |
| E | X | 0,2 | 9/00 | 107 |
| | X | 0,5 | 9/00 | 102 |
| | I | 0,2 | 13/00 | 102 |
| | I | 0,5 | 11/15 | 89 |
| F | X | 0,2 | 7/15 | 111 |
| | I | 0,2 | 10/30 | 127 |

Beispiel 3

Für die Herstellung UV-stabilisierter Formstoffe, z.B. für Feinschichten oder Lichtplatten, werden UP-Harze eingesetzt, die UV-Absorber enthalten. Diese Zusätze können die UV-Härtungsgeschwindigkeit beeinträchtigen. Wie stark sich dieser Effekt auswirkt, zeigen folgende Versuche.

Zubereitungen aus Harz A, handelsüblichen UV-Absorbern (0,1%) und je 0,2% Sensibilisator I bzw. X wurden nach der geschilderten Reaktivitätsmessung mit Leuchtstoffröhren gehärtet. Die Ergebnisse in Tab. 5 zeigen, dass die UV-absorberhaltigen Zubereitungen erwartungsgemäss reaktionsträger sind als die nicht UV-stabilisierten. Zugleich wird aber deutlich, dass die erfindungsgemässen Zubereitungen sehr viel schneller härten als die mit Sensibilisator I.

Tabelle 5
UV-Härtung lichtstabilisierter Zubereitungen aus Harz A

| Sensibilisator (0,2%) | UV-Stabilisator (0,1%) | HZ25 °C–$T_{max}$ [min/s] | $T_{max}$ [°C] |
|---|---|---|---|
| | – | 5/36 | 122 |
| X | ®Cyasorb UV 531[1] | 14/00 | 97 |
| | ®Sanduvor EPU[2] | 10/30 | 117 |
| | – | 6/54 | 120 |
| I | Cyasorb UV 531 | 33/15 | 89 |
| | Sanduvor EPU | 20/00 | 110 |

[1] Hersteller: American Cyanamid
[2] Hersteller: Sandoz

Beispiel 4

Um den Einfluss von mineralischen Füllstoffzusätzen auf die UV-Härtungsgeschwindigkeit zu ermitteln, wurde Harz A, das mit 0,2% Initiator X sensibilisiert war, in Gegenwart von verschiedenen Füllstoffen UV-gehärtet (Strahlungsquelle: Leichtstoffröhre TUV 40 W/05, Philips). Die nach der geschilderten Messmethode aufgezeichnete Temperatur-Zeitkurve lieferte die Werte für die Härtungszeit und die maximale Härtungstemperatur $T_{max}$.

Die Ergebnisse dieser Untersuchungen gehen aus Tab. 6 hervor.

Tabelle 6
UV-Härtung füllstoffhaltiger Zubereitungen[1] aus Harz A

| Füllstoff (%) | | HZ25 °C–$T_{max}$ [min/s] | $T_{max}$ [°C] |
|---|---|---|---|
| Aluminiumoxidhydrat (®Martinal BM2)[2] | (30) | 7/50 | 117 |
| Kieselsäure | (2) | 8/30 | 129 |
| Gips ($CaSO_4 \cdot 2H_2O$) | (30) | 8/40 | 111 |
| Bariumsulfat | (30) | 8/40 | 87 |
| Quarzpulver | (30) | 6/00 | 112 |

[1] Die Schichtdicke der Formstoffe (Rondelle) betrug 4,8 mm.
[2] Hersteller: Martinswerke, Bergheim/Erft.

Beispiel 5

Die Härtungsaktivität erfindungsgemässer Zubereitungen aus Harz A wurden auch mit der längerwelligen Strahlung einer mit Natriumjodid dotierten Lampe (HRI, 2000 W, «Power-Star») bestimmt. Gegenüber der beschriebenen Verfahrensweise betrug der Lampenabstand zur Substratoberfläche 60 cm.

Tabelle 7
UV-Härtung erfindungsgemässer Formmassen mit einem Initiatorgehalt von 0,2%

| Sensibilisator | HZ25 °C–$T_{max}$ [min/s] | $T_{max}$ [°C] | Farbe des Formstoffs |
|---|---|---|---|
| I | 9/00 | 140 | stark vergilbt |
| X | 6/45 | 142 | wasserhell |
| XI | 9/25 | 145 | wasserhell |
| XII | 10/55 | 170 | wasserhell |
| XV | 13/10 | 120 | wasserhell |
| XVIII | 14/10 | 135 | wasserhell |

Die Formstoffe aus erfindungsgemässen Massen sind im Gegensatz zu dem mit einem Gehalt an Benzildimethylketal (I) nicht vergilbt.

Beispiel 6
Herstellung von glasfaserverstärkten UP-Formmassen

a) Es wurden aus Harz A (Zubereitungen mit 0,15% Benzildimethylketal (Ansatz 1) bzw. mit 0,15% Pivaloyldiphenylphosphinoxid (Ansatz 2) Glasfasermatten-Laminate (der Glasfasergehalt betrug 25%) von 5 und 10 mm Dicke hergestellt und mit UV-Licht (Leuchtstoffröhren TUV 40 W/05, Philips) im Abstand von 11 cm bestrahlt. Nach bestimmten Belichtungszeiten wurde an der der Lichtquelle entgegengesetzten Laminatseite die Barcolhärte (Barcol-Impressor, Modell 934-1) gemessen. Die Ergebnisse sind in Tabelle 8 zusammengefasst.

Tabelle 8
UV-Härtung von GF–UP-Laminaten

| Bel.-Zeit [min] | 5 mm-Laminat Barcol-Härte Ansatz 1 | Ansatz 2 | Bel.-Zeit [min] | 10 mm-Laminat Barcol-Härte Ansatz 1 | Ansatz 2 |
|---|---|---|---|---|---|
| 14 | 0 | 0 | 45 | 0 | 0 |
| 16 | 0 | 4–6 | 50 | 0 | 2–4 |
| 18 | 0–4 | 12–20 | 55 | 0 | 4–20 |
| 20 | 0–10 | 25–30 | 60 | 0 | 10–20 |
| 25 | 6–15 | 34–38 | 70 | 0 | 20–35 |
| 30 | 20–30 | 42–46 | 80 | 0 | 25–35 |
| 35 | 28–35 | – | 100 | 0 | 28–37 |
| 40 | 35–45 | – | | | |

b) Zur Härtung mit einem Quecksilberdampf-Hochdruckstrahler wurden aus den Ansätzen 1 und 2 Mattenlaminate mit 9 mm Dicke (Glasfasergehalt 39%) auf Polyesterfolie hergestellt und auf einen Drehtisch im Abstand von 35 cm unter den UV-Strahlern gedreht. Die effektive Belichtungszeit betrug 3 Minuten, die Laminatdicke 9 mm.

Wurde nach dem Abkühlen der Formstoffe an der dem Strahler entgegengesetzten Seite die Barcolhärte bestimmt, so zeigte sich auch hier die Überlegenheit des erfindungsgemässen Initiators Pivaloydiphenylphosphinoxid X gegenüber Benzildimethylketal (I). Die Barcolhärte beim Ansatz 2 betrug 50, die beim Ansatz 1 Null.

Beispiel 7
UV-Härtung von Blöcken aus UP-Harz A

a) In Formen aus Glasplatten (16 × 11 × 11 cm), deren innere Seitenflächen mit einer gelben Folie verkleidet waren, wurden je 1800 g Harz A – katalysiert einerseits mit Benzildimethylketal (I; 0,05%) anderseits mit Pivaloyldiphenylphosphinoxid (X, 0,05%) – mit Leuchtstoffröhren (TUV 40 W/0,5, Philips) belichtet. Dabei war die Versuchsordnung so getroffen, dass das UV-Licht (aus einem Feld von 10 Lampen nebeneinander, 87 × 49 cm) von unten durch die gläsernen Bodenplatten in die Harzzubereitungen eindringen konnte. Der Abstand Lampe/Form betrug 17 cm, die zu härtende Schichtdicke 9 cm.

Diese Versuche zeigten deutlich, dass das erfindungsgemässe Sensibilisatorsystem eine wesentlich schnellere Durchhärtung als Benzildimethylketal gestattet. Während mit Benzildimethylketal nach 9stündiger Belichtung ein gelber Farbstoff erhalten wird, dessen obere Schicht noch flüssig ist, resultiert nach $1^1/_2$ Stunden Belichtung aus der erfindungsgemässen Zubereitung ein heller durchgehärteter Formstoff.

b) In weiteren Versuchen wurde die angehärtete Schichtdicke verschiedener Harzzubereitungen in Abhängigkeit von der Bestrahlungszeit gemessen. Dazu wurden die sensibilisierten Mischungen aus Harz A und Fotoinitiatoren jeweils in einer Kristallisierschale (Durchmesser: 9 cm), deren Seitenwände mit UV-undurchlässigem Papier (® Tesakrepp) verklebt waren, mit Leuchtstoffröhren (TUV 40 W/05, Philips) von oben belichtet. Der Abstand von Harzoberfläche zur Strahlungsquelle betrug 11 cm.

Ein schmaler vertikaler Sehschlitz in der Wandverklebung gestattete den Fortgang der Härtung in tiefere Schichten messend zu verfolgen. Die Grenze zwischen gehärteter und ungehärteter Harzschicht war wegen der unterschiedlichen Brechungsindizes leicht zu erkennen. Die Ergebnisse sind in Tabelle 9 zusammengefasst.

Während mit Benzildimethylketal nur 18 von 62 mm in 80 Minuten gehärtet wurden, waren es mit Pivaloyldiphenylphosphinoxid (X) 62 mm, also der gesamte Block. Durch Zusatz von tert.-Butylperoctoat wurde die Härtungszeit auf 30 Minuten verkürzt.

Tabelle 9
UV-Härtung von Harzzubereitungen in dicken Schichten

| Zusammensetzung | gesamte Schichtdicke [mm] | Belichtungszeit [min] | angehärtete Schichtdicke [mm] |
|---|---|---|---|
| Harz A | 62 | 10 | 8 |
| | | 20 | 14 |
| + Benzildimethylketal | | 30 | 18 |
| (0,15%) | | 60 | 18 |
| | | 80 | 18 |
| Harz A | 62 | 10 | 13 |
| | | 20 | 21 |
| + Pivaloyldiphenylphosphinoxid[1] | | 30 | 28 |
| (0,15%) | | 40 | 34 |
| | | 50 | 41 |
| | | 60 | 48 |
| | | 70 | 55 |
| | | 80 | 62 |
| Harz A | 60 | 10 | 18 |
| + Pivaloyldiphenylphosphinoxid | | 20 | 32 |
| (0,15%) | | 30 | 60 |
| + tert.-Butylperoctoat (0,15%) | | | |
| Harz A | 45 | 10 | 7 |
| + Versatoyldiphenylphosphinoxid (XV) | | 20 | 11 |
| (0,2%) | | 30 | 14 |
| | | 60 | 18 |
| | | 120 | 45 |

Beispiel 8

Zur Beurteilung der Lichtvergilbung von UP-Harz-Formstoffen wurden 4,8 mm dicke Rondellen (Durchmesser 5 cm) aus verschiedenen Harzen, die mit 0,2% UV-Initiator sensibilisiert waren, durch Belichtung mit Leuchtstoffröhren (TUV 40 W/05, Philips) gehärtet und anschliessend 40 Minuten bei Raumtemperatur der Strahlung eines UV-Feldes aus 10 Leuchtstoffröhren des genannten Typs ausgesetzt. Der Abstand Strahlungsquelle Rondelloberfläche betrug 11 cm.

Die Vergilbung wurde anhand des Yellowness-Index nach ASTM D 1925–67 beurteilt. Die Messung erfolgt mit dem Gerät DMC 25 der Fa. Zeiss in der Durchsicht.

Aus den Ergebnissen der Tabelle 10 geht eindeutig hervor, dass die Formstoffe aus den erfindungsgemässen Zubereitungen in allen Fällen geringer vergilbt sind als solche aus bekannten Zubereitungen (Gehalt an Sensibilisatoren I–IV).

Tabelle 10
Vergilbung UV-gehärteter Formstoffe aus verschiedenen UP-Harzen

| UP-Harze | UV-Sensibilisator (0,2%) | Yellowness-Index |
|---|---|---|
| A | I | 5,74 |
| | II | 5,43 |
| | III | 5,33 |
| | IV | 4,21 |
| | X | 2,84 |
| | XI | 2,59 |
| | XII | 1,82 |
| | XVIII | 2,61 |
| | XV | 2,75 |
| | XVI | 2,87 |
| B | I | 10,84 |
| | II | 9,18 |
| | III | 6,10 |

Tabelle 10 (Fortsetzung)

| UP-Harze | UV-Sensibilisator (0,2%) | Yellowness-Index |
|---|---|---|
| B | IV | 5,93 |
| | X | 3,81 |
| | XI | 4,93 |
| | XII | 3,73 |
| | XVIII | 5,38 |
| F | I | 7,28 |
| | II | 5,62 |
| | III | 4,83 |
| | IV | 5,55 |
| | X | 3,37 |
| | XI | 3,39 |
| | XII | 3,37 |
| | XVIII | 3,58 |
| E | I | 13,37 |
| | X | 6,00 |

Beispiel 9

Um sicherzustellen, dass bei der UV-Härtung peroxidhaltiger Formmassen die erfindungsgemässen Sensibilisatoren ebenfalls weniger gefärbte Produkte ergeben, wurden Zubereitungen aus Harz A, tert.-Butylperoctoat und Sensibilisatoren I, II und X in einer UV-durchlässigen Form (5,3 × 3,4 × 1,45 cm) mit Leuchtstoffröhren (TUV 40 W/05, Philips) aus einem Abstand von 15 cm 25 Minuten lang belichtet. Anschliessend wurden die erkalteten Blöcke 1 Stunde bei Raumtemperatur dem Licht derselben UV-Strahler ausgesetzt.

Der Formstoff mit dem Sensibilisator X weist den niedrigsten Yellowness-Index auf, er ist also am geringsten vergiblt (Tabelle 11).

Tabelle 11
Vergilbung peroxidhaltiger, UV-gehärteter Formstoffe aus Harz A

| Sensibilisator (0,35%) | tert.-Butylperoctoat [%] | Yellowness-Index |
|---|---|---|
| I | 0,05 | 6,04 |
| II | 0,1 | 5,10 |
| X | 0,1 | 3,37 |

Beispiel 10

Herstellung einer Feinschicht, die auf Papierlaminate oder GFK-Oberflächen verpresst werden kann.

Beispielsweise wurde mit einer Zubereitung aus Harz A, 0,5% Sensibilisator X und 1% Benzoylperoxid ein etwa 100 $\mu$m dicker Film auf eine Trennfolie aufgetragen und unter einer Quecksilberdampf-Hochdrucklampe mit 1 m/min hindurchgeführt. Der Abstand Lampe/Folie betrug 25 cm. Die so angehärtete Feinschicht liess sich in der Wärme auf eine Papierlaminat- oder GFK-Oberfläche verpressen. Die Feinschicht war nicht vergilbt.

In den folgenden Beispielen 11 bis 17 wurden die besonders bevorzugten hochreaktiven UV-Sensibilisatoren eingesetzt.

Beispiel 11

Zubereitungen aus den UP-Harzen A, C, G, B und dem Vinylesterharz K mit 0,2% verschiedener Sensibilisatoren wurden in der oben beschriebenen Weise mit UV-Licht gehärtet.

Ein Vergleich der Härtungsaktivität (Tabelle 12) zeigt, dass mit den Initiatoren XX bis XXIV die schnellsten Härtungen möglich sind. Pivaloyldiphenylphosphinoxid (X) erreicht zwar die Aktivität von 2,6-Dichlorbenzoyl-diphenylphosphinoxid (XXII), allerdings fällt seine Aktivität beim Lagern in UP-Harzen mit der Zeit ab.

Tabelle 12
UV-Härtung sensibilisierter UP-Harze und eines Vinylesterharzes durch Belichtung mit Leuchtstoffröhren

| UP-Harz bzw. Vinylesterharz | UV-Initiator (0,2%) | HZ25 °C–$T_{max}$ [min/s] | $T_{max}$ [°C] |
|---|---|---|---|
| A | I | 8/00 | 114 |
| C | I | 9/45 | 119 |
| G | I | 10/15 | 123 |
| B | I | 8/30 | 122 |
| K | I | 15/53 | 63 |
| A | III | 13/22 | 104 |
| C | III | 13/07 | 109 |
| G | III | 13/15 | 114 |
| B | III | 11/15 | 108 |
| A | IV | 13/22 | 100 |
| C | IV | 11/30 | 117 |
| G | IV | 11/15 | 123 |
| B | IV | 9/08 | 122 |
| A | X | 7/30 | 107 |
| C | X | 6/45 | 116 |
| G | X | 6/38 | 123 |
| B | X | 5/30 | 123 |
| A | XX | 4/30 | 125 |
| C | XX | 4/00 | 129 |
| G | XX | 3/38 | 127 |
| B | XX | 3/15 | 127 |
| K | XX | 5/35 | 92 |
| A | XXI | 5/23 | 120 |
| C | XXI | 5/00 | 123 |
| G | XXI | 4/25 | 132 |
| B | XXI | 4/15 | 125 |
| K | XXI | 6/30 | 91 |
| A | XXII | 7/08 | 105 |
| C | XXII | 6/35 | 111 |
| B | XXII | 5/51 | 115 |
| K | XXII | 10/45 | 72 |

Tabelle 12 (Fortsetzung)

| UP-Harz bzw. Vinylester-harz | UV-Initiator (0,2%) | HZ25 °C–$T_{max}$ [min/s] | $T_{max}$ [°C] |
|---|---|---|---|
| A | XXIII | 5/15 | 102 |
| C | XXIII | 4/45 | 119 |
| B | XXIII | 4/36 | 122 |
| K | XXIII | 6/30 | 87 |
| A | XXIV | 6/15 | 94 |
| C | XXIV | 4/38 | 110 |
| K | XXIV | 7/38 | 91 |

Beispiel 12

Zubereitungen aus den UP-Harzen A bzw. B und verschiedenen UV-Initiatoren wurden in verschlossenen Gefässen bei 60 °C gelagert und anschliessend bei Raumtemperatur die Härtungsaktivität – wie im Beispiel 11 beschrieben – gemessen.

In Tabelle 13 sind die Messergebnisse vor und nach Lagerung gegenübergestellt. Sie zeigen sehr deutlich, dass die Initiatoren XX bis XXIV ihre Aktivität unter den Versuchsbedingungen konstant gehalten haben. In dieselbe Richtung weisen auch Lagerversuche über eine längere Zeitspanne bei Raumtemperatur (Tabelle 14).

Tabelle 13
Prüfung der Härtungsaktivität UV-sensibilisierter UP-Harze nach Lagerung bei 60 °C

| UV-Initiator (0,2%) | UP-Harz | UV-Härtung vor Lagerung HZ25 °C–$T_{max}$ [min/s] | $T_{max}$ [°C] | Lagerzeit [h] | Härtung nach Lagerung HZ25 °C–$T_{max}$ [min/s] | $T_{max}$ [°C] |
|---|---|---|---|---|---|---|
| XX | A | 4/30 | 125 | 106 | 5/00 | 119 |
| XX | A | 4/30 | 125 | 66 | 4/53 | 122 |
| XX | B | 3/15 | 127 | 66 | 3/45 | 127 |
| XXI | A | 5/20 | 119 | 66 | 5/23 | 120 |
| XXI | B | 4/15 | 125 | 66 | 3/38 | 129 |
| XXII | A | 7/08 | 105 | 70 | 7/30 | 93 |
| XXII | B | 5/51 | 115 | 70 | 6/00 | 102 |
| XXIII | A | 5/15 | 102 | 70 | 4/52 | 100 |
| XXIV | A | 6/15 | 94 | 70 | 6/41 | 89 |
| XXIV | C | 4/38 | 110 | 70 | 6/00 | 102 |

Beispiel 13

Zubereitungen aus den UP-Harzen A bzw. B und verschiedenen UV-Initiatoren wurden in verschlossenen Gefässen bei Raumtemperatur dunkel gelagert und die Härtungsaktivität nach der in Beispiel 11 geschilderten Methode von Zeit zu Zeit gemessen. Die Ergebnisse in Tabelle 14 zeigen, dass mit dem Initiator XX lagerfähige UVhärtbare UP-Harze erhalten werden.

Tabelle 14
Prüfung der Härtungsaktivität UV-sensibilisierter UP-Harze nach Lagerung bei Raumtemperatur

| UV-Initiator UP-Harz | [%] | XX (0,20) A | XX (0,35) B |
|---|---|---|---|
| Lagerzeit | [d] | 0 | 0 |
| HZ25 °C–$T_{max}$ | [min/s] | 4/30 | 5/38 |
| $T_{max}$ | [°C] | 118 | 118 |
| Lagerzeit | [d] | 63 | 63 |
| HZ25 °C–$T_{max}$ | [min/s] | 4/00 | 6/00 |
| $T_{max}$ | [°C] | 113 | 106 |

Beispiel 14

Zur Beurteilung der Lichtvergilbung von UP-Harzformstoffen wurden 4,8 mm dicke Rondelle (Durchmesser 5 cm) aus den UP-Harzen A, H und J, die mit verschiedenen UV-Initiatoren sensibilisiert waren, durch Belichtung mit Leuchtstoffröhren (TL AK 40 W/05, Philips) gehärtet und anschliessend 60 bzw. 120 Minuten bei Raumtemperatur der Strahlung derselben Lichtquellen ausgesetzt (5 Leuchtstoffröhren nebeneinander). Der Abstand Strahlungsquelle-Rondelloberfläche betrug 8,5 cm.

Die Vergilbung wurde anhand des Yellowness-Index nach ASTM D 1925–67 beurteilt. Die Messung erfolgte mit dem Gerät DMC 25 der Fa. Zeiss in der Durchsicht.

Aus den Ergebnissen der Tabelle 15 geht eindeutig hervor, dass die Formstoffe aus den erfindungsgemässen Zubereitungen in allen Fällen geringer vergilbt sind, als solche aus bekannten Zubereitungen mit einem Gehalt an Benzildimethylketal (I).

Tabelle 15
Vergilbung UV-gehärteter UP-Harzformstoffe

| UP-Harz | UV-Initiator [%] | Belichtungszeit [min] | Yellowness-Index des Formstoffs |
|---|---|---|---|
| H | I (0,2) | 60 | 13,18 |
| H | I (0,2) | 120 | 14,56 |
| J | I (0,2) | 60 | 13,88 |
| J | I (0,2) | 120 | 16,38 |
| H | XX (0,2) | 60 | 3,78 |
| H | XX (0,2) | 120 | 4,19 |
| J | XX (0,2) | 60 | 3,82 |
| J | XX (0,2) | 120 | 4,19 |
| A | XXI (0,2) | 60 | 3,08 |
| A | XX (0,15) | 60 | 2,87 |

Beispiel 15

UV-Härtung von UP-Harzformmassen

a) 60 Teile der Zubereitungen aus UP-Harz G mit 0,1% UV-Initiator XX bzw. 0,1% Benzildimethylketal (I) wurden mit 40 Teilen Füllstoff® Martinal BM 2 ($Al_2O_3 \cdot 3H_2O$, Fa. Martinswerke, Bergheim/Erft) und mit 1,5% Magnesiumoxid «leicht» (Hersteller: Fa. Merck, Darmstadt) (bezogen auf UP-Harz) vermischt. Mit diesen Mischungen wurden mehrere Lagen Glasfasermatten (®Vetrotex Textilglasmatte M 123–40–450) der Abmessung 10 × 12 cm getränkt, zwischen Polyesterfolien drei Tage bei Raumtemperatur eingedickt und schliesslich durch Belichtung mit Leuchtstoffröhren (TL AK 40 W/05) gehärtet, wobei mit Hilfe eines Thermoelements der Temperaturverlauf in der Formmasse verfolgt wurde. Der Abstand Strahler (5 Leuchtstoffröhren nebeneinander) zur Formmassenoberfläche betrug 8 cm; die Belichtungszeit entsprach der Zeitspanne, in der die Formmasse die maximale Härtungstemperatur erreicht hatte.

Nach Erkalten der Formstoffe wurde die Barcol-Härte (Impressor 935) an Unter- und Oberseite bestimmt.

Die Ergebnisse der Tabelle 16 lassen ganz klar die Vorteile der erfindungsgemässen Zubereitung mit dem UV-Initiator XX erkennen. Bei drei Lagen Glasfasermatten – entsprechend einer Schichtdicke von 3,8 bis 4,5 mm – genügt eine Belichtungszeit von 5 Minuten 15 Sekunden, bei einer Sichtdicke von 6,6 bis 7,2 mm (= 7 Lagen Glasfasermatten) eine solche von etwa 13 Minuten, um eine ausreichende Durchhärtung der Formmasse zu erzielen. Im Falle der Formmasse auf Basis Benzildimethylketal (I) wird trotz Verdoppelung der Belichtungszeit keine Durchhärtung des Laminates bei 7 Lagen Glasfasermatten erreicht.

Tabelle 16
UV-Härtung einer Harzmatte auf Basis UP-Harz G, $Al_2O_3 \cdot 3H_2O$ und Glasfasermatten

| Initiator (0,1%) | Schichtdicke[1] [mm] | Lagen Glasfasermatten | UV-Härtung HZ25 °C–$T_{max}$ [min/s] | $T_{max}$ [°C] | gehärtete Schichtdicke [mm] | Barcolhärte oben/unten |
|---|---|---|---|---|---|---|
| XX | 3,8–4,5 | 3 | 5/15 | 78 | 3,8–4,5 | 92–94/92–94 |
| XX | 6,6–7,3 | 7 | 13/15 | 80 | 6,6–7,3 | 91–96/85–91 |
| I | 6,6–7,2 | 7 | 25/20 | 62 | 4,5 | 94–96/ 0–10 |

[1] Harzmattenaufbau: 48,1% UP-Harz G, 32,1% $Al_2O_3 \cdot 3H_2O$ (Martinol BM2), 19,8% Glasfasermatten (Vetrotex Textilglasmatte M 123-40-450).

b) Knetbare, glasfaserfreie UP-Harzformmassen wurden durch 3tägiges Eindicken von Zubereitungen aus UP-Harz G, Füllstoff $Al_2O_3 \cdot 3H_2O$ (Martinal BM 2, Martinswerke, Bergheim/Erft), 1,5% Magnesiumoxid «leicht» (bez. auf UP-Harz) und UV-Initiator XX bzw. Benzildimethylketal (I) (jeweils 0,1% bez. auf UP-Harz) hergestellt. Das Gewichtsverhältnis von UP-Harz zu Füllstoff betrug 60:40.

In einem Blechdeckel wurden nun jeweils eine 2 cm dicke Schicht 35 Minuten der Strahlung von Leuchtstoffröhren (TL AK 40 W/05, Philips) ausgesetzt, wobei der Temperaturverlauf mit Hilfe eines Thermoelements, das 1 cm tief in die Formmasse eintauchte, verfolgt wurde. Der Abstand Strahler/Formmassenoberfläche betrug 6 cm. Nach dem Erkalten wurde die nicht gehärtete untere Formmassenschicht mechanisch entfernt

und die Barcolhärte (Impressor 935) der so neu geschaffenen Oberfläche nach Säuberung gemessen.

Bei der erfindungsgemässen Formmasse war eine 12,6 mm dicke Schicht, bei der bekannten Formmasse mit einem Gehalt an Benzildimethylketal (I) eine solche von nur 7 mm Dicke gehärtet (vgl. Tabelle 17).

Tabelle 17
UV-Härtung von eingedickten Harz-Füllstoffmischungen

| Initiator (0,1%) | Schichtdicke [mm] | UV-Härtung $T_{max}$ [°C] | gehärtete Schichtdicke [mm] | Barcolhärte oben/unten |
|---|---|---|---|---|
| XX | 20 | 63 | 12,6 | 93/65–70 |
| I | 20 | 42 | 7 | 93/67 |

Beispiel 16

Zubereitungen aus dem UP-Harz A und den UV-Sensibilisatoren XX und I sowie deren Gemische wurden in einer Schichtdicke von 10 mm mit Leuchtstoffröhren (TL AK 40 W/05, Philips) bestrahlt. Die UP-Harzproben befanden sich in Weissblechdeckeln mit einem Durchmesser von 5 cm, die zur Vermeidung grösserer Wärmeverluste auf einer Korkplatte (5 mm dick) standen. Der Abstand Leuchtstoffröhre zu Harzoberfläche betrug 8 cm. Nach der Belichtung und dem Abkühlen wurde aus den Formstoffen jeweils ein Stab ausgesägt, wobei die gesamte Schichtdicke erfasst wurde, und dessen Reststyrolgehalt titrimetrisch nach DIN 16 945 ermittelt. Die erhaltenen Ergebnisse sind in Tabelle 18 zusammengefasst. Sie zeigen, dass die Reststyrolgehalte der Formstoffproben mit der Sensibilisatorkombination XX und I geringer sind als mit den Sensibilisatoren XX und I allein.

Tabelle 18
Reststyrolgehalt UV-gehärteter UP-Harzformstoffe aus Harz A

| Beispiel | UV-Sensibilisator Art | Menge Gew.%, bezogen auf das Gewicht der Kompoenten (a) und (b) | Belichtungszeit [min] | Reststyrolgehalt [Gew.%] |
|---|---|---|---|---|
| a | XX | 0,1 | 10 | 1,35 |
| | | | 20 | 1,3 |
| b | XX+I | 0,05+0,05 | 10 | 1,07 |
| | | | 20 | 0,65 |
| c | XX+I | 0,075+0,025 | 10 | 1,06 |
| | | | 20 | 0,8 |
| d | I | 0,1 | 10 | teilweise noch flüssig |
| | | | 20 | 1,15 |

Beispiel 17

Die Lichthärtung ungesättigter Polyesterharze lässt sich mit den erfindungsgemässen Fotoinitiatoren auch zweistufig durchführen, wobei in der ersten Stufe nach kurzer Belichtungszeit ein flexibles, lagerfähiges Halbzeug entsteht, das verformt, geschnitten und beispielsweise zur Knopfherstellung gestanzt werden kann. Durch erneute Belichtung in der zweiten Stufe erfolgt schliesslich die Endaushärtung:

Eine 0,1%ige Lösung von 2,4,6-Trimethylbenzoyl-diphenylphosphinoxid (XX) in Harz A wurde in einer 2 mm dicken Schicht zwischen zwei Polyesterfolien 1 Minute lang mit Leuchtstoffröhren (TL AK 40 W/05, Philips) bestrahlt. Der Abstand Strahler/Harzoberfläche betrug 10 cm.

Es wurde ein flexibles Halbzeug erhalten, das mit einem scharfen Messer leicht schneidbar und mit der Hand einfach zu verformen war. Die Barcolhärte auf beiden Seiten betrug 0 (Barcol-Impressor 935).

Nach 24 Stunden Lagerung bei Raumtemperatur unter Lichtausschluss wurde das unverändert flexible Halbzeug durch erneute Belichtung mit den Leuchtstoffröhren ausgehärtet (Belichtungszeit: 15 Minuten). Die Barcolhärte des Formstoffs betrug nach Abkühlung auf Raumtemperatur 87–89; er war hart geworden.

Zur Vermeidung eines grösseren Wärmeverlustes lag das Halbzeug während der Belichtung auf einer Schaumkunststoffplatte.

**Patentansprüche**

1. Lichthärtbare Form-, Tränk- und Überzugsmassen, enthaltend ein Gemisch aus
a) mindestens einem äthylenisch ungesättigten copolymerisierbaren Polyester,
b) mindestens einer äthylenisch ungesättigten copolymerisierbaren monomeren Verbindung,
c) einem Inhibitor,
d) 0,005 bis 5 Gew.-%, bezogen auf a + b, eines UV-Sensibilisators sowie gegebenenfalls
e) Paraffinen, thermisch zerfallenden Initiatoren, Füllstoffen, Verstärkungsmitteln, Gleitmitteln, inerten Lösungsmitteln, schrumpfungsmindernden Zusätzen und/oder weiteren bei ungesättigten Polyestermassen verwendbaren Hilfsstoffen,

dadurch gekennzeichnet, dass der UV-Sensibilisator besteht aus mindestens einer Acylphosphinoxid-Verbindung der Formel

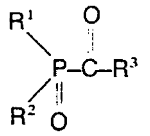

(I)

wobei
$R^1$ für einen geradkettigen oder verzweigten Alkylrest mit 1 bis 6 Kohlenstoffatomen, einen Cyclohexyl-, Cyclopentyl-, Aryl-, halogen-, alkyl- oder alkoxyl-substituierten Aryl-, einen S- oder N-haltigen fünf- oder sechsgliedrigen heterocyclischen Rest steht;
$R^2$ die Bedeutung von $R^1$ hat, wobei $R^1$ und $R^2$ untereinander gleich oder verschieden sein können, oder für einen Alkoxyrest mit 1 bis 6 Kohlenstoffatomen, für einen Aryloxy- oder einen Arylalkoxyrest steht, oder $R^1$ und $R^2$ unter Einbeziehung des Phosphoratoms zu einem Ring verbunden sind;
$R^3$ für einen geradkettigen oder verzweigten Alkylrest mit 2 bis 18 Kohlenstoffatomen, einen 3 bis 10 Kohlenstoffatome enthaltenden cycloaliphatischen Rest, einen Phenyl- oder Naphthylrest, einen S-, O- oder N-haltigen fünf- oder sechsgliedrigen heterocyclischen Rest steht, wobei die Reste $R^3$ gegebenenfalls weitere Substituenten tragen können, oder für die Gruppierung

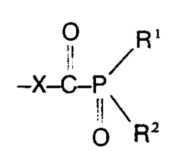

steht, worin $R^1$ und $R^2$ die oben angegebene Bedeutung haben und X für einen Phenylrest oder einen 2 bis 6 Kohlenstoffatome enthaltenden aliphatischen oder cycloaliphatischen zweiwertigen Rest steht und
gegebenenfalls einer oder mehrere der Reste $R^1$ bis $R^3$ olefinisch ungesättigt ist.

2. Lichthärtbare Form-, Tränk- und Überzugsmassen gemäss Anspruch 1, dadurch gekennzeichnet, dass der UV-Sensibilisator besteht aus einer Acylphosphinoxid-Verbindung der Formel I, wobei $R^1$ und $R^2$ die oben genannte Bedeutung haben und $R^3$ ein tertiärer aliphatischer Rest ist.

3. Lichthärtbare Form-, Tränk- und Überzugsmassen gemäss Anspruch 1, dadurch gekennzeichnet, dass der UV-Sensibilisator besteht aus einer Acylphosphinoxid-Verbindung der Formel I, wobei $R^1$ und $R^2$ die oben genannte Bedeutung haben und $R^3$ einen Cycloalkylrest, Phenylrest, Naphthylrest, einen S-, N- oder O-haltigen fünf- oder sechsgliedrigen heterocyclischen Rest bedeutet, der zumindest in den beiden ortho-Stellungen zur Carbonylgruppe die Substituenten A und B gebunden enthält, wobei A und B gleich oder verschieden sind und für Alkyl-, Cycloalkyl-, Aryl-, Alkoxy-, Thioalkyl-, Carbalkoxy-, Cyanogruppen oder Halogenatome stehen.

4. Lichthärtbare Form-, Tränk- und Überzugsmassen gemäss Anspruch 3, dadurch gekennzeichnet, dass der UV-Sensibilisator besteht aus einer Acylphosphinoxid-Verbindung der Formel I, wobei $R^1$ und $R^2$ die oben genannte Bedeutung haben und $R^3$ ein 2,4,6-Trimethylphenyl-Rest ist.

5. Lichthärtbare Form-, Tränk- und Überzugsmassen gemäss Anspruch 1, dadurch gekennzeichnet, dass sie als UV-Sensibilisatoren Acylphosphinoxid-Verbindungen der Formel I in Kombination mit aromatischen Ketonen, aromatischen Disulfiden oder Naphthalinsulfonylchloriden im Gewichtsverhältnis 85:15 bis 15:85 enthalten.

6. Lichthärtbare Form-, Tränk- und Überzugsmassen gemäss Anspruch 5, dadurch gekennzeichnet, dass als aromatische Ketone Benzilketale, Benzoinäther oder Benzoinester verwendet werden.

7. Formkörper, hergestellt aus lichthärtbaren Form-, Tränk- und Überzugsmassen nach Anspruch 1.

**Claims**

1. A photocurable molding, impregnating and coating composition comprising a mixture of
a) at least one ethylenically unsaturated copolymerizable polyester,
b) at least one ethylenically unsaturated copolymerizable monomeric compound,
c) an inhibitor and
d) 0,005 to 5% by weight, based on a + b, of a UV sensitizer, with or without
e) paraffins, thermally decomposable initiators, fillers, reinforcing agents, lubricants, inert solvents, shrinkagereducing additives and/or other assistants usable in unsaturated polyesters,

characterized in that the UV sensitizer consists of one or more acylphosphine oxide compounds of the formula

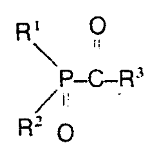

(I)

where $R^1$ is straight-chain or branched alkyl of 1 to 6 carbon atoms, cyclohexyl, cyclopentyl, aryl which is unsubstituted or substituted by halogen, alkyl or alkoxy, or a S-containing or N-containing five-membered or six-membered heterocyclic radical, $R^2$ has one of the meanings fo $R^1$ (but $R^1$ and $R^2$ may be identical or different), or is alkoxy of 1 to 6 carbon atoms, aryloxy or aralkoxy, or $R^1$ and $R^2$ together with the phosphorus atom form a ring, and $R^3$ is straight-chain or branched alkyl of 2 to 18 carbon atoms, a cycloaliphatic radical of 3 to 10 carbon atoms, phenyl, naphthyl or a S-, O- or N-containing five-membered or six-membered heterocyclic radical, and may contain additional substituents, or is the group

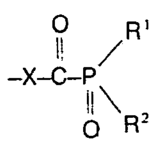

where $R^1$ and $R^2$ have the above meanings and X is phenylene or an aliphatic or cycloaliphatic divalent radical of 2 to 6 carbon atoms, and one or more of the radicals $R^1$ to $R^3$ may be olefinically unsaturated.

2. A photocurable molding, impregnating and coating composition as claimed in claim 1, characterized in that the UV sensitizer is an acylphosphine oxide compound of the formula I in which $R^1$ and $R^2$ have the above meanings and $R^3$ is a tertiary aliphatic radical.

3. A photocurable molding, impregnating and coating composition as claimed in claim 1, characterized in that the UV sensitizer is an acylphosphine oxide compound of the formula I, in which $R^1$ and $R^2$ have the above meanings and $R^3$ is cycloalkyl, phenyl, naphthyl or a S-, N- or O-containing five-membered or six-membered heterocyclic radical, which contains substituents A and B at least in the two positions ortho to the carbonyl group, A and B being identical or different and each being alkyl, cycloalkyl, aryl, alkoxy, thioalkyl, carbalkoxy, cyano or halogen.

4. A photocurable molding, impregnating and coating composition as claimed in claim 3, characterized in that the UV sensitizer is an acylphosphine oxide compound of the formula I, in which $R^1$ and $R^2$ have the above meanings and $R^3$ is 2,4,6-trimethylphenyl.

5. A photocurable molding, impregnating and coating composition as claimed in claim 1, characterized in that the UV sensitizer is an acylphosphine oxide compound of the formula I, in combination with an aromatic ketone, aromatic disulfide or naphthalenesulfonyl chloride, in a weight ratio of from 85:15:85.

6. A photocurable molding, impregnating and coating composition as claimed in claim 5, characterized in that the aromatic ketone is a benzil ketal, benzoin ether or benzoin ester.

7. Moldings prepared from a photocurable molding, impregnating and coating composition as claimed in claim 1.

**Revendications**

1. Matière à mouler, imprégner et enduire, durcissables à la lumière, contenant un mélange de

a) au moins un polyester copolymérisable à insaturation éthylénique
b) au moins un composé monomère copolymérisable à insaturation éthylénique
c) un inhibiteur
d) 0,005 à 5% en poids, rapporté à a+b, d'un sensibilisateur UV, ainsi qu'éventuellement de
e) paraffines, initiateurs se décomposant thermiquement, charges, agents de renforcement, agents de démoulage, solvants inertes, additifs diminuant le retrait, et/ou autres auxiliaires utilisables avec des masses de polyester insaturées,

caractérisées par le fait que le sensibilisateur UV est constitué par au moins un dérivé d'acylphosphinoxyde de formule

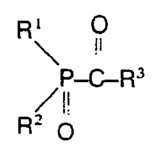

(I)

dans laquelle

$R^1$ représente un reste alkyle linéaire ou ramifié à 1 à 6 atomes de carbone, un reste cyclohexyle, cyclopentyle, aryle, aryle substitué par halogène, alkyle ou alcoxyle, un reste hétérocyclique à cinq ou six termes et contenant S ou N

$R^2$ a la signification de $R^1$, $R^1$ et $R^2$ pouvant être identiques ou différents l'un de l'autre, ou représente un reste alcoxy à 1 à 6 atomes de carbone, un reste aryloxy ou arylalcoxy, ou $R^1$ et $R^2$ sont reliés à un noyau avec intervention de l'atome de phosphore

$R^3$ représente un reste alkyle, linéaire ou ramifié, à 2 à 18 atomes de carbone, un reste cycloaliphatique contenant 3 à 10 atomes de carbone, un reste phényle ou naphtyle, un reste hétérocyclique à cinq ou six membres et contenant S, O ou N, les restes $R^3$ pouvant porter éventuellement d'autres substituants, ou le groupement

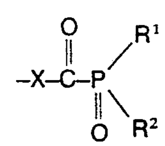

où $R^1$ et $R^2$ ont la signification donnée plus haut et X représente un reste phényle ou un reste bivalent aliphatique ou cycloaliphatique, contenant 2 à 6 atomes de carbone, et

éventuellement un ou plusieurs des restes $R^1$ à $R^3$ est insaturé oléfiniquement.

2. Matières à mouler, imprégner et enduire, durcissables à la lumière, selon la revendication 1, caractérisées par le fait que le sensibilisateur UV est constitué d'un dérivé d'acylphosphinoxyde de formule I, $R^1$ et $R^2$ ayant les significations indiquées plus haut et $R^3$ étant un reste aliphatique tertiaire.

3. Matières à mouler, imprégner et enduire, durcissables à la lumière, selon la revendication 1, caractérisées par le fait que le sensibilisateur UV est constitué d'un dérivé d'acylphosphinoxide de formule I, $R^1$ et $R^2$ ayant les significations indiquées plus haut et $R^3$ étant un reste cycloalkyle, phényle, naphtyle, un reste hétérocyclique à cinq ou six membres à teneur en S, N ou O, et qui, au moins dans les deux positions ortho par rapport au groupe carbonyle, contient liés les substituants A et B, A et B étant identiques ou différents et représentant des groupes alkyle, cycloalkyle, aryle, alcoxy, thioalkyle, carbalcoxy, cyano ou un atome d'halogène.

4. Matières à mouler, imprégner et enduire, durcissables à la lumière, selon la revendication 3, caractérisées par le fait que le sensibilisateur UV est constitué d'un dérivé d'acylphosphinoxyde de formule I, $R^1$ et $R^2$ ayant les significations indiquées plus haut et $R^3$ étant un reste 2,4,6-triméthylphényle.

5. Matières à mouler, imprégner et enduire, durcissables à la lumière, selon la revendication 1, caractérisées par le fait qu'elles contiennent, comme sensibilisateurs UV des dérivés d'acylphosphinoxyde de formule I en combinaison avec des cétones aromatiques, disulfures aromatiques ou chlorures de naphtalènesulfonyle, en proportions en poids de 85/15 à 15/85.

6. Matières à mouler, imprégner et enduire, durcissables à la lumière, selon la revendication 5, caractérisées par le fait que sont utilisés, comme cétones aromatiques, des benzilecétals, benzoinéthers ou benzoinesters.

7. Pièces moulées fabriquées à partir de matières à mouler, imprégner et enduire, durcissables à la lumière.